# EUROPEAN PATENT APPLICATION

(11) **EP 4 773 522 A1**
(43) Date of publication of application: **08.07.2026**
(21) Application number: 26150435.1
(22) Date of filing: 06.01.2026
(51) Int. Cl.: H04B 10/2575, G08C 23/04, H04B 10/278, H04B 10/40, H04B 10/80

(54) **FULL DUPLEX ELECTRICAL COMMUNICATION ADAPTED TO OPTICAL LINK**

(30) Priority: 07.01.2025 US 202563742735 P; 05.01.2026 US 202619440113
(71) Applicant: Analog Devices, Inc., Wilmington, MA 01887 (US)
(72) Inventor: KESSLER, Martin, Wilmington, 01887 (US); BAWA, Iqbal Gadugal, Wilmington, 01887 (US)
(74) Representative: Wallin, Nicholas James

(57) **Abstract**

First node signal-separation circuitry obtains first node electrical transmit signal (TX1) from a full-duplex electrical communication signal. First node transmit components convert TX1 to a first node optical transmit signal (OTX1) and send OTX1 over an optical link. Second node receive components receive OTX1 and convert it to a first node electrical transmit signal (TX1) at the second node. Second node signal-separation circuitry obtains a second node electrical transmit signal (TX2) from a full-duplex electrical communication signal of the second node. Second node transmit components convert TX2 to a second node optical transmit signal (OTX2) and send OTX2 over the optical link. First node receive components receive OTX2 from the optical link and convert it to TX2 at the first node. At each node the full-duplex electrical signal comprises a superposition of a locally transmitted electrical transmit signal and a counterpart electrical transmit signal received from the optical link.

## Description

### PRIORITY CLAIM

This application claims the benefit of priority from U.S. Provisional Patent Application No. 63/742,735, filed January 7, 2025, titled "Full Duplex Electrical Communication Adapted to Optical Link," and US Patent Application No. 19/440,113, filed January 5, 2026, and titled the same, the entire contents of each of which are incorporated by reference herein.

### BACKGROUND

The present disclosure relates to electrical and optical communication systems. Examples of the technology disclosed herein (hereinafter, "the technology") relates to full duplex transmission over fiber-optic links and interfaces that bridge electrical networks to optical media.

### SUMMARY

In some aspects, the techniques described herein relate to a method for full-duplex communication between nodes over an electrical interface and an optical link, the method including: obtaining, by signal-separation circuitry of a first node, a first node electrical transmit signal from a full-duplex electrical communication signal present on the electrical interface; converting, by transmit components of the first node, the first node electrical transmit signal to a first node optical transmit signal and sending the first node optical transmit signal over at least one optical link; receiving, by receive components of a second node, the first node optical transmit signal from the at least one optical link and converting the first node optical transmit signal to a first node electrical transmit signal at the second node; obtaining, by signal-separation circuitry of the second node, a second node electrical transmit signal from a full-duplex electrical communication signal present on an electrical interface of the second node; converting, by transmit components of the second node, the second node electrical transmit signal to a second node optical transmit signal and sending the second node optical transmit signal over the at least one optical link; and receiving, by receive components of the first node, the second node optical transmit signal from the at least one optical link and converting the second node optical transmit signal to a second node electrical transmit signal at the first node, wherein at each node the full-duplex electrical communication signal includes a superposition of a locally transmitted electrical transmit signal and a counterpart electrical transmit signal received from the at least one optical link.

In some aspects, the techniques described herein relate to a method, wherein obtaining the electrical transmit signal includes using one or more directional couplers. In some aspects, the techniques described herein relate to a method, wherein the electrical interface is one of single-ended and differential. In some aspects, the techniques described herein relate to a method, wherein converting between electrical and optical domains is performed without transitioning to a digital domain. In some aspects, the techniques described herein relate to a method, wherein the at least one optical link includes an optical fiber. In some aspects, the techniques described herein relate to a method, wherein the full-duplex electrical communication signal includes one of (i) a line-coded baseband signal and (ii) a carrier-based or modulated signal. In some aspects, the techniques described herein relate to a method, wherein an end-to-end latency introduced by converting and transporting over the at least one optical link is less than a maximum latency corresponding to a maximum supported electrical link distance for the full-duplex electrical communication signal. In some aspects, the techniques described herein relate to a method, further including deploying at least one node to couple an electrical interface inside an electromagnetic-compatibility chamber to an electrical interface outside the electromagnetic-compatibility chamber.

In some aspects, the techniques described herein relate to a node configured for full-duplex communication over an electrical interface and an optical link, the node including: signal-separation circuitry configured to obtain a first node electrical transmit signal from a full-duplex electrical communication signal present on the electrical interface; transmit components configured to convert the first node electrical transmit signal to a first node optical transmit signal and to send the first node optical transmit signal over at least one optical link; and receive components configured to receive a peer optical transmit signal from the at least one optical link and to convert the peer optical transmit signal to a peer electrical transmit signal, wherein the full-duplex electrical communication signal includes a superposition of the first node electrical transmit signal and the peer electrical transmit signal.

In some aspects, the techniques described herein relate to a communication system including: a first node and a second node interconnected by at least one optical link, each of the first node and the second node including: signal-separation circuitry configured to: obtain a local electrical transmit signal from a full-duplex electrical communication signal present on an electrical interface; transmit components configured to convert the local electrical transmit signal to an optical transmit signal and to send the optical transmit signal over the at least one optical link; and receive components configured to receive a counterpart optical transmit signal from the at least one optical link and to convert the counterpart optical transmit signal to a counterpart electrical transmit signal, wherein, at each node, the full-duplex electrical communication signal includes a superposition of the local electrical transmit signal and the counterpart electrical transmit signal.

### BRIEF DESCRIPTION OF THE DRAWINGS

FIG. 1 is a block diagram of a communication system configured to bridge full-duplex electrical communication signals over an optical fiber link, in accordance with examples of the technology disclosed herein.
FIG. 2 is a block diagram of an example two-wire communication system in which the system of FIG. 1 may be integrated, in accordance with examples of the technology disclosed herein.
FIG. 3 is a block diagram of a node transceiver that may be included in a node of the system of FIG. 2, in accordance with examples of the technology disclosed herein.
FIG. 4 is a diagram of a portion of a synchronization control frame used for communication in the system of FIG. 2, in accordance with examples of the technology disclosed herein.
FIG. 5 is a diagram of a superframe used for communication in the system of FIG. 2, in accordance with examples of the technology disclosed herein.
FIG. 6 is a diagram of example formats for a synchronization control frame in different modes of operation of the system of FIG. 2, in accordance with examples of the technology disclosed herein.
FIG. 7 is a diagram of example formats for a synchronization response frame at different modes of operation of the system of FIG. 2, in accordance with examples of the technology disclosed herein.
FIG. 8 is a block diagram of various components of the bus protocol circuitry of FIG. 3, in accordance with examples of the technology disclosed herein.
FIGS. 9-12 are diagrams of examples of information exchange along a two-wire bus, in accordance with examples of the technology disclosed herein.
FIG. 13 is a diagram of a ring topology for the two-wire bus and a unidirectional communication scheme thereon, in accordance with examples of the technology disclosed herein.
FIG. 14 is a block diagram illustrating methods for full-duplex communication between nodes over an electrical interface and an optical link, in accordance with examples of the technology disclosed herein.
FIG. 15 is a block diagram of a device that may serve as a node or host in the system of FIG. 2, in accordance with examples of the technology disclosed herein.

### DETAILED DESCRIPTION

In the following detailed description, reference is made to the accompanying drawings which form a part hereof wherein like numerals designate like parts throughout, and in which is shown by way of illustration examples that may be practiced. It is to be understood that other examples may be utilized, and structural or logical changes may be made, without departing from the scope of the present disclosure. Therefore, the following detailed description is not to be taken in a limiting sense.

Various operations may be described as multiple discrete actions or operations in turn, in a manner that is most helpful in understanding the claimed subject matter. However, the order of description should not be construed as to imply that these operations are necessarily order dependent. In particular, these operations may not be performed in the order of presentation. Operations described may be performed in a different order than the described example. Various additional operations may be performed and/or described operations may be omitted in additional examples. For the purposes of the present disclosure, the phrase "A and/or B" means (A), (B), or (A and B). For the purposes of the present disclosure, the phrase "A, B, and/or C" means (A), (B), (C), (A and B), (A and C), (B and C), or (A, B, and C).

Various components may be referred to or illustrated herein in the singular (e.g., a "processor," a "peripheral device," etc.), but this is simply for ease of discussion, and any element referred to in the singular may include multiple such elements in accordance with the teachings herein. The description uses the phrases "in an example" or "in examples," which may each refer to one or more of the same or different examples. Furthermore, the terms "comprising," "including," "having," and the like, as used with respect to examples of the present disclosure, are synonymous. As used herein, the term "circuitry" may refer to, be part of, or include an application-specific integrated circuit (ASIC), an electronic circuit, and optical circuit, a processor (shared, dedicated, or group), and/or memory (shared, dedicated, or group) that execute one or more software or firmware programs, a combinational logic circuit, and/or other suitable hardware that provide the described functionality.

In some examples of the technology, a full duplex electrical communication signal on a single wire or single differential wire pair is to be bridged over an optical fiber link. For example, such bridging may be used into and out of a shielded chamber for EMC (electromagnetic compatibility tests) or to extend the distance between communicating nodes.

Prior solutions include transceivers that rely on pre-separated signal paths for transmitting and receiving data, utilizing distinct electrical transmitters and receivers interfaced with corresponding optical transmitters and receivers. These transceivers are specifically engineered to facilitate optical communication. However, no existing solution has been identified for scenarios where signals have already been combined into a bi-directional signal within the electrical domain. Bidirectional optical communication (BiDi) is commonly employed for transmitting full-duplex signals over a single optical fiber by leveraging distinct optical wavelengths, enabling simultaneous transmission and reception. In BiDi, however, the electrical inputs and outputs are unidirectional.

To address one or more of the deficiencies of the prior solutions, examples of the present technology relate to a full duplex electrical communication on a single wire or single twisted pair wire that is adapted to a fiber optical link without transitioning into the digital domain. This is not limited to line coded communication but is also applicable for carrier-based or modulated signals as in Automotive Audio Bus (A2B^{®}) 2.0 communication systems. An A2B^{®} communication system is an innovative technology from Analog Devices, Inc. that allows the implementation of in-line topology with a single primary node connecting to up to ten secondary nodes, such as via a daisy chain. With a speed of 50 Mbps, the A2B^{®} communication system is optimized for audio applications. Connectivity is simplified by using an unshielded twisted pair (UTP) cable, which reduces the total weight of electrical system harnesses. This reduction in weight is useful due to the increased implementation of active noise cancellation (ANC) and road noise cancellation (RNC) systems, which require several microphones inside the car, adding many other inputs (and additional cables) to the audio network. Also, the same UTP supplies power (phantom powered configuration), up to 300 mA, which is useful for powering digital microphones in ANC and RNC applications. One concern in automotive applications is related to electromagnetic compatibility (EMC). The A2B^{®} communication system has passed the most stringent automotive EMC and electromagnetic interference (EMI)-compatibility tests using just a 2-wire UTP cable. Also, RNC applications require accelerometers and microphones distributed around and inside the vehicle. The use of analog parts increases cost, as it would require additional circuitry (analog-to-digital converters), wiring, and connectors. The A2B technology simplifies this architecture with a novel approach to audio sources and sensors.

More specifically, the technology includes systems and methods to bridge full-duplex electrical communication signals over an optical fiber link. The systems and methods enable seamless transmission and reception of bidirectional signals between nodes while preserving the full-duplex nature of the communication. This is achieved, in part, using directional couplers, amplifiers, optical transceivers, and low-latency components. The systems and methods may be particularly useful for applications requiring electromagnetic compatibility (EMC) capabilities or long-distance communication between nodes, where traditional electrical links face limitations. Examples of the technology also address the limitations of the prior solutions by enabling the use of combined bidirectional electrical signals in optical communication systems.

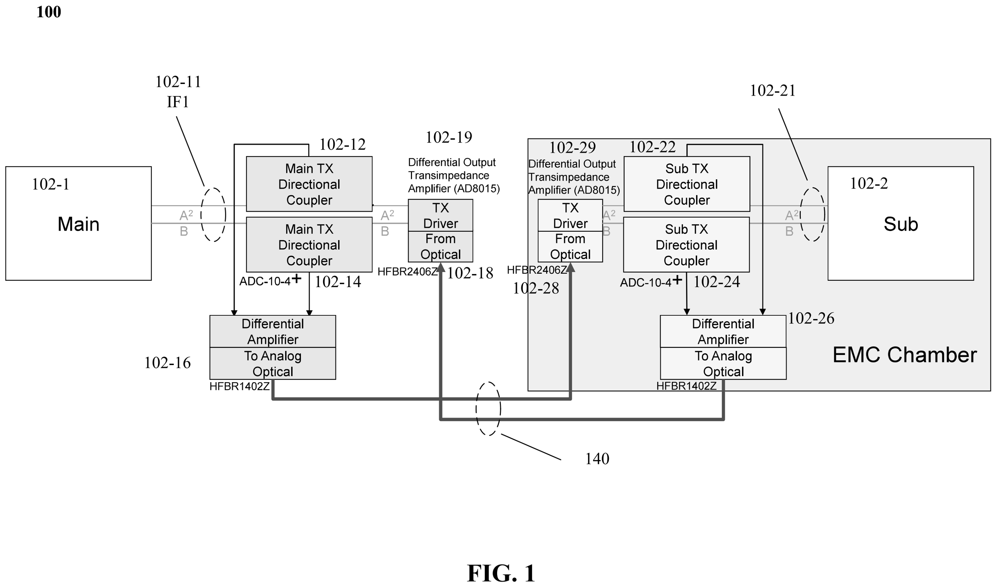

Referring to FIG. 1, in some examples, the technology includes a communication system 100 for enabling full-duplex electrical communication over optical fiber links by separating and transmitting signals between nodes. In an aspect, the separation and transmission of the signal may be achieved without converting them into the digital domain. The system 100 includes two Main Transmit (TX) Directional Couplers (coupler 102-12 and coupler 102-14) and two Sub TX Directional Couplers (coupler 102-22 and coupler 102-24), which manage signal routing for the Main node 102-1 and Sub node(s) 102-2, respectively. System 100 additionally includes two Differential Amplifiers to Analog Optical modules (module 102-16 and module 102-26), such as an HFBR1402Z fiber optic transmitter from Broadcom Limited, respectively utilized at the Main node 102-1 and Sub node(s) 102-2 to convert electrical signals into optical signals. The converted signals are transmitted through one or more optical fibers 140, interfacing with TX Drivers from Optical modules (module 102-18, module 102-28), such as an HFBR2406Z fiber optic receiver from Broadcom Limited, respectively utilized at the Main node 102-1 and Sub node(s) 102-2 to reconvert optical signals to electrical form. Differential Output Transimpedance Amplifiers (amplifier 102-19, amplifier 102-29), such as AD8015 transimpedance amplifier from Analog Devices, Inc., respectively utilized at the Main node 102-1 and Sub node(s) 102-2 to amplify these signals for further processing. In some aspects, a modular design can be achieved by respectively integrating the modules at each of the Main node 102-1 and Sub node(s) 102-2 into respective single modules. It should be noted that the like-named modules at each of the Main node 102-1 and Sub node(s) 102-2 are similar functional modules. In any case, this configuration of the system 100 enables seamless bidirectional communication, ensuring that the transmitted signal from one node is combined with the received signal from the other node to reconstruct the full-duplex electrical signal at all nodes. The technology finds use in such applications as those involving EMC chambers, and such as in long-distance communications.

In particular, the technology includes systems and methods to separate the transmit signal of a first node from the full-duplex electrical communication signal and send this signal over fiber optics (or another optical medium) towards the receiving second node where the transmit signal from the first node transitions from optical to electrical and is then combined with the transmitted signal of the second node to re-create the fully duplex electrical signal as expected by the second node receiver. Simultaneously, the second node transmitted signal is separated from the full duplex signal at the second node, sent over fiber optics (or another optical medium) towards the first node where the signal from the second node transitions from optical to electrical and is then combined with the first node's transmitted signal to again form a full duplex electrical signal as expected by the first node receiver.

Thus, examples of the technology provide a combination of an electrical full-duplex signal, which may be either single-ended or differential, and directional couplers to facilitate signal separation and routing. Amplifiers are utilized to enhance the separated signals and drive the optical transmitter effectively, enabling seamless optical communication. Additionally, transimpedance amplifiers or buffers, configured for either differential or single-ended operation, are employed to drive the communication line. In some examples, the use of low-latency components ensures uninterrupted communication over the electrical link, where latency is maintained below the threshold of the greatest distance an electrical link can support.

In other words, examples of the technology include a combination of an electrical full-duplex signal (single ended or differential), directional couplers, amplifiers to gain up the separated signal and drive the optical transmitters, optical communication, transimpedance amplifiers/buffers to drive the communication line (differential or single ended), along with low latency components that that avoid breaking the communication of electrical link, such as where the latency less than the maximum distance electrical link would provide.

As noted above, the communication system 100 may be implemented in an A2B^{®} communication system.

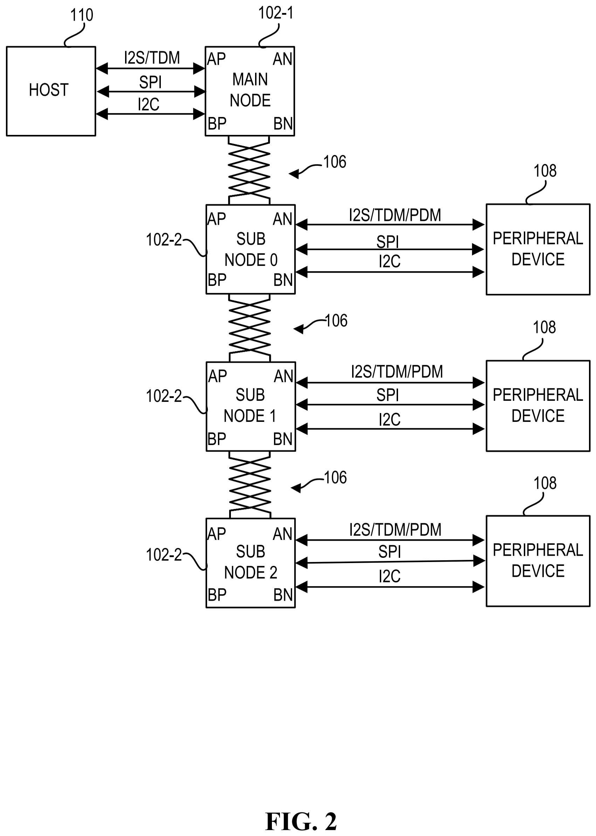

Referring to FIG. 2, for example, an example of an A2B^{®} communication system includes a two-wire communication system 101, which may be configured to implement one or more aspect of the communication system 100. Communication system 101 includes a host 110, a main node 102-1 and at least one sub node 1022. In FIG. 2, three sub nodes (0, 1, and 2) are illustrated, although the depiction of three sub nodes 102-2 is simply illustrative, and the system 101 may include one, two, or more sub nodes 102-2, as desired.

The main node 102-1 may communicate with the sub nodes 102-2 over a two-wire bus 106. The bus 106 may include different two-wire bus links between adjacent nodes along the bus 106 to connect the nodes along the bus 106 in a daisy-chain fashion. For example, as illustrated in FIG. 2, the bus 106 may include a link coupling the main node 102-1 to the sub node 0, a link coupling the sub node 0 to the sub node 1, and a link coupling the sub node 1 to the sub node 2. In some aspects, the links of the bus 106 may each be formed of a single twisted-wire pair (e.g., an unshielded twisted pair). In some aspects, the links of the bus 106 may each be formed of a coax cable (e.g., with the core providing the "positive" line and the shield providing the "negative" line, or vice versa). The two-wire bus links together provide a complete electrical path (e.g., a forward and a return current path) so that no additional ground or voltage source lines need be used.

The host 110 may include a processor that programs the main node 102-1, and acts as the originator and recipient of various payloads transmitted along the bus 106. In some aspects, the host 110 may be or may include a microcontroller, for example. In particular, the host 110 may be the master of Inter-Integrated Circuit Sound (I2S) communications that happen along the bus 106. The host 110 may communicate with the main node 102-1 via an I2S/Time Division Multiplex (TDM) protocol, a Serial Peripheral Interface (SPI) protocol, and/or an Inter-Integrated Circuit (I2C) protocol. In some aspects, the main node 102-1 may be a transceiver (e.g., the node transceiver 120 discussed below with reference to FIG. 2) located within a same housing as the host 110. The main node 102-1 may be programmable by the host 110 over the I2C bus for configuration and read-back, and may be configured to generate clock, synchronization, and framing for all the sub nodes 102-2. In some aspects, an extension of the I2C control bus between the host 110 and the main node 102-1 may be embedded in the data streams transmitted over the bus 106, allowing the host 110 direct access to registers and status information for the one or more sub nodes 102-2, as well as enabling I2C-to-I2C communication over distance to allow the host 110 to control the peripheral devices 108. In some aspects, an extension of the SPI control bus between the host 110 and the main node 102-1 may be embedded in the data streams transmitted over the bus 106, allowing the host 110 direct access to registers and status information for the one or more sub nodes 102-2, as well as enabling SPI-to-SPI or SPI-to-I2C communication over distance to allow the host 110 to control the peripheral devices 108. In aspects in which the system 101 is included in a vehicle, the host 110 and/or the main node 102-1 may be included in a headend of the vehicle.

The main node 102-1 may generate "downstream" signals (e.g., data signals, power signals, etc., transmitted away from the main node 102-1 along the bus 106) and receive "upstream" signals (e.g., transmitted toward the main node 102-1 along the bus 106). The main node 102-1 may provide a clock signal for synchronous data transmission over the bus 106. As used herein, "synchronous data" may include data streamed continuously (e.g., audio signals) with a fixed time interval between two successive transmissions to/from the same node along the bus 106. In some aspects, the clock signal provided by the main node 102-1 may be derived from an I2S input provided to the main node 102-1 by the host 110. A sub node 102-2 may be an addressable network connection point that represents a possible destination for data frames transmitted downstream on the bus 106 or upstream on the bus 106. A sub node 102-2 may also represent a possible source of downstream or upstream data frames. The system 101 may allow for control information and other data to be transmitted in both directions over the bus 106 from one node to the next. One or more of the sub nodes 102-2 may also be powered by signals transmitted over the bus 106.

Each of the main node 102-1 and the sub nodes 102-2 may include a positive upstream terminal (denoted as "AP"), a negative upstream terminal (denoted as "AN"), a positive downstream terminal (denoted as "BP"), and a negative downstream terminal (denoted as "BN"). The positive and negative downstream terminals of a node may be coupled to the positive and negative upstream terminals of the adjacent downstream node, respectively. As shown in FIG. 2, the main node 102-1 may include positive and negative upstream terminals, but these terminals may not be used; in other aspects, the main node 102-1 may not include positive and negative upstream terminals. The last sub node 1022 along the bus 106 (the sub node 2 in FIG. 2) may include positive and negative downstream terminals, but these terminals may not be used; in other aspects, the last sub node 102-2 along the bus may not include positive and negative downstream terminals.

As discussed in detail below, the main node 102-1 may periodically send a synchronization control frame downstream, optionally along with data intended for one or more of the sub nodes 102-2. For example, the main node 102-1 may transmit a synchronization control frame every 1024 bits (representing a superframe) at a frequency of 48 kHz, resulting in an effective bit rate on the bus 106 of 49.152 Mbps. Other rates may be supported, including, for example, 44.1 kHz. The synchronization control frame may allow the sub nodes 102-2 to identify the beginning of each superframe and, in combination with physical layer encoding/signaling, may allow each sub node 102-2 to derive its internal operational clock from the bus 106. The synchronization control frame may include a preamble for signaling the start of synchronization, as well as control fields that allow for various addressing modes (e.g., normal, broadcast, discovery), configuration information (e.g., writing to registers of the sub nodes 102-2), conveyance of I2C information, conveyance of SPI information, remote control of certain general-purpose input/output (GPIO) pins at the sub nodes 102-2, and other services. A portion of the synchronization control frame following the preamble and the payload data may be scrambled to reduce the likelihood that information in the synchronization control frame will be mistaken for a new preamble, and to flatten the spectrum of related electromagnetic emissions.

The synchronization control frame may get passed between sub node 1022 (optionally along with other data, which may come from the main node 102-1 but additionally or alternatively may come from one or more upstream sub nodes 1022 or from a sub node 102-2 itself) until it reaches the last sub node 102-2 (i.e., the sub node 2 in FIG. 2), which has been configured by the main node 102-1 as the last sub node 102-2 or has self-identified itself as the last sub node 102-2. Upon receiving the synchronization control frame, the last sub node 102-2 may transmit a synchronization response frame followed by any data that it is permitted to transmit (e.g., a 24-bit audio sample in a designated time slot). The synchronization response frame may be passed upstream between sub nodes 102-2 (optionally along with data from downstream sub nodes 102-2), and based on the synchronization response frame, each sub node 102-2 may be able to identify a time slot, if any, in which the sub node 102-2 is permitted to transmit.

In some aspects, one or more of the sub nodes 102-2 in the system 101 may be coupled to and communicate with a peripheral device 108. For example, a sub node 102-2 may be configured to read data from and/or write data to the associated peripheral device 108 using I2S, pulse density modulation (PDM), TDM, SPI, and/or I2C protocols, as discussed below. Although the "peripheral device 108" may be referred to in the singular herein, this is simply for ease of discussion, and a single sub node 102-2 may be coupled with zero, one, or more peripheral devices. Examples of peripheral devices that may be included in the peripheral device 108 may include a digital signal processor (DSP), a field programmable gate array (FPGA), an ASIC, an analog-to-digital converter (ADC), a digital-to-analog converter (DAC), a codec, a microphone, a microphone array, a speaker, an audio amplifier, a protocol analyzer, an accelerometer or other motion sensor, an environmental condition sensor (e.g., a temperature, humidity, and/or gas sensor), a wired or wireless communication transceiver, a display device (e.g., a touchscreen display), a user interface component (e.g., a button, a dial, or other control), a camera (e.g., a video camera), a memory device, or any other suitable device that transmits and/or receives data. A number of examples of different peripheral device configurations are discussed in detail herein.

In some aspects, the peripheral device 108 may include any device configured for I2S communication; the peripheral device 108 may communicate with the associated sub node 102-2 via the I2S protocol. In some aspects, the peripheral device 108 may include any device configured for I2C communication; the peripheral device 108 may communicate with the associated sub node 102-2 via the I2C protocol. In some aspects, the peripheral device 108 may include any device configured for SPI communication; the peripheral device 108 may communicate with the associated sub node 102-2 via the SPI protocol. In some aspects, a sub node 102-2 may not be coupled to any peripheral device 108.

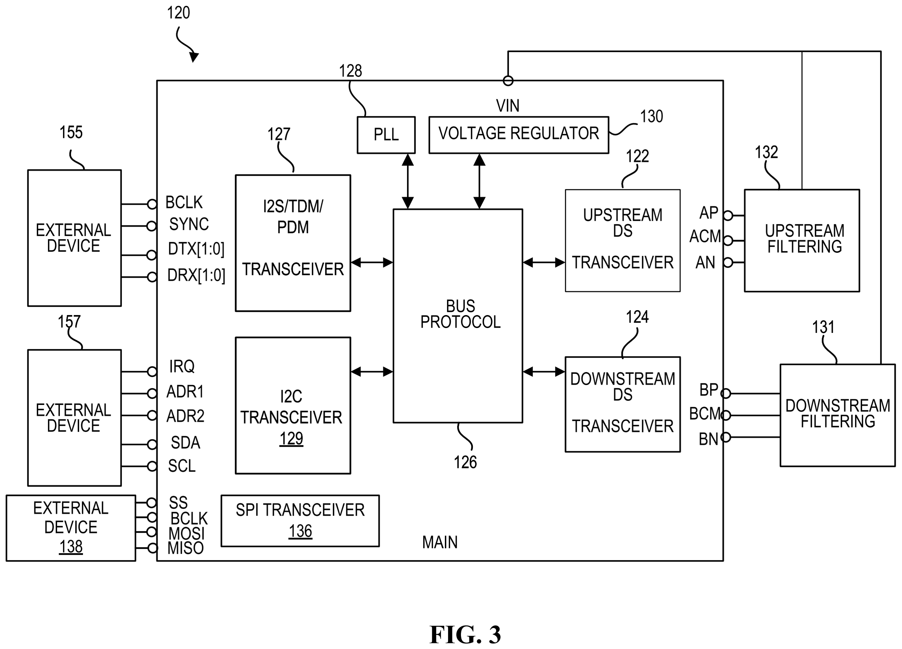

A sub node 102-2 and its associated peripheral device 108 may be contained in separate housings and coupled through a wired or wireless communication connection or may be contained in a common housing. For example, a speaker connected as a peripheral device 108 may be packaged with the hardware for an associated sub node 102-2 (e.g., the node transceiver 120 discussed below with reference to FIG. 3), such that the hardware for the associated sub node 102-2 is contained within a housing that includes other speaker components. The same may be true for any type of peripheral device 108.

As discussed above, the host 110 may communicate with and control the main node 102-1 using multi-channel I2S, SPI, and/or I2C communication protocols. For example, the host 110 may transmit data via I2S to a frame buffer (not illustrated) in the main node 102-1, and the main node 102-1 may read data from the frame buffer and transmit the data along the bus 106. Analogously, the main node 102-1 may store data received via the bus 106 in the frame buffer and then may transmit the data to the host 110 via I2S.

Each sub node 102-2 may have internal control registers that may be configured by communications from the main node 102-1. A number of such registers are discussed in detail below. Each sub node 102-2 may receive downstream data and may retransmit the data further downstream. Each sub node 102-2 may receive and/or generate upstream data and/or retransmit data upstream and/or add data to and upstream transaction.

Communications along the bus 106 may occur in periodic superframes. Each superframe may begin with a downstream synchronization control frame; be divided into periods of downstream transmission (also called "downstream portions"), upstream transmission (also called "upstream portions"), and no transmission (where the bus 106 is not driven); and end just prior to transmission of another downstream synchronization control frame. The main node 102-1 may be programmed (by the host 110) with a number of downstream portions to transmit to one or more of the sub nodes 102-2 and a number of upstream portions to receive from one or more of the sub nodes 102-2. Each sub node 102-2 may be programmed (by the main node 102-1) with a number of downstream portions to retransmit down the bus 106, a number of downstream portions to consume, a number of upstream portions to retransmit up the bus 106, and a number of upstream portions in which the sub node 102-2 may transmit data received from the sub node 102-2 from the associated peripheral device 108. Communication along the bus 106 is discussed in further detail below with reference to FIGS. 3-13.

Aspects of the communication systems 101 disclosed herein are unique among conventional communication systems in that all sub nodes 102-2 may receive output data over the bus 106 within the same superframe (e.g., all sub nodes 102-2 may receive the same audio sample without sample delays between the nodes 102). In conventional communication systems, data is buffered and processed in each node before being passed downstream in the next frame to the next node. Consequently, in these conventional communication systems, the latency of data transmission depends on the number of nodes (with each node adding a delay of one audio sample). In the communication systems 101 disclosed herein, the bus 106 may only add one cycle of latency, no matter if the first or last sub node 102-2 receives the data. The same is true for upstream communication; data may be available at an upstream node 102 in the next superframe, no matter which sub node 102-2 provided the data.

Further, in aspects of the communication systems 101 disclosed herein, downstream data (e.g., downstream audio data) may be put on the bus 106 by the main node 102-1 or by any of the sub nodes 102-2 that are upstream of the receiving sub node 102-2; similarly, upstream data (e.g., upstream audio data) may be put on the bus 106 by any of the sub nodes 102-2 that are downstream of the receiving node 102 (i.e., the main node 102-1 or a sub node 102-2). Such capability allows a sub node 102-2 to provide both upstream and downstream data at a specific time (e.g., a specific audio sample time). For audio data, this data can be received in the next audio sample at any downstream or upstream node 102 without further delays (besides minor processing delays that fall within the superframe boundary). As discussed further herein, control messages (e.g., in a synchronization control frame (SCF)) may travel to the last node 102 (addressing a specific node 102 or broadcast) and an upstream response (e.g., in a synchronization response frame (SRF)) may be created by the last downstream node 102 within the same superframe. Nodes 102 that have been addressed by the SCF change the content of the upstream SRF with their own response. Consequently, within the same audio sample, a control and a response may be fully executed over multiple nodes 102. This is also in contrast to conventional communication systems, in which sample latencies would be incurred between nodes (for relaying messages from one node to the other).

Each of the main node 102-1 and the sub nodes 102-2 may include a transceiver to manage communication between components of the system 101.

Referring to FIG. 3, a node transceiver 120 that may be included in a node (e.g., the main node 102-1 or a sub node 102-2) of the system 101 of FIG. 2 or the system 100 of FIG. 1, in accordance with various aspects. In some aspects, a node transceiver 120 may be included in each of the nodes of the system 101, and a control signal may be provided to the node transceiver 120 via a main (MAIN) pin to indicate whether the node transceiver 120 is to act as a main node (e.g., when the MAIN pin is high) or a sub node (e.g., when the MAIN pin is low).

The node transceiver 120 may include an upstream differential signaling (DS) transceiver 122 and a downstream DS transceiver 124. The upstream DS transceiver 122 may be coupled to the positive and negative upstream terminals discussed above with reference to FIG. 2, and the downstream DS transceiver 124 may be coupled to the positive and negative downstream terminals discussed above with reference to FIG. 2. In some aspects, the upstream DS transceiver 122 may be a low voltage DS (LVDS) transceiver, and the downstream DS transceiver 124 may be an LVDS transceiver. Each node in the system 101 may be AC-coupled to the bus 106, and data signals may be conveyed along the bus 106 (e.g., via the upstream DS transceiver 122 and/or the downstream DS transceiver 124) using a predetermined form of DS (e.g., LVDS or Multipoint LVDS (MLVDS) or similar signaling) with appropriate encoding to provide timing information over the bus 106 (e.g., differential Manchester coding, biphase mark coding, Manchester coding, Non-Return-to-Zero, Inverted (NRZI) coding with run-length limiting, or any other suitable encoding).

The upstream DS transceiver 122 and the downstream DS transceiver 124 may communicate with bus protocol circuitry 126, and the bus protocol circuitry 126 may communicate with a phased locked loop (PLL) 128 and voltage regulator circuitry 130, among other components. When the node transceiver 120 is powered up, the voltage regulator circuitry 130 may raise a "Power Good" signal that is used by the PLL 128 as a power-on reset.

As noted above, one or more of the sub nodes 102-2 in the system 101 may receive power transmitted over the bus 106 concurrently with data. For power distribution (which is optional, as some of the sub nodes 102-2 may be configured to have exclusively local power provided to them), the main node 102-1 may place a DC bias on the bus link between the main node 102-1 and the sub node 0 (e.g., by connecting, through a low-pass filter, one of the downstream terminals to a voltage source provided by a voltage regulator and the other downstream terminal to ground). The DC bias may be a predetermined voltage, such as 5 volts, 8 volts, the voltage of a car battery, or a higher voltage. Each successive sub node 102-2 can selectively tap its upstream bus link to recover power (e.g., using the voltage regulator circuitry 130). This power may be used to power the sub node 102-2 itself (and optionally one or more peripheral device 108 coupled to the sub node 1022). A sub node 102-2 may also selectively bias the bus link downstream for the next-in-line sub node 102-2 with either the recovered power from the upstream bus link or from a local power supply. For example, the sub node 0 may use the DC bias on the upstream link of the bus 106 to recover power for the sub node 0 itself and/or for one or more associated peripheral device 108, and/or the sub node 0 may recover power from its upstream link of the bus 106 to bias its downstream link of the bus 106.

Thus, in some aspects, each node in the system 101 may provide power to the following downstream node over a downstream bus link. The powering of nodes may be performed in a sequenced manner. For example, after discovering and configuring the sub node 0 via the bus 106, the main node 102-1 may instruct the sub node 0 to provide power to its downstream link of the bus 106 in order to provide power to the sub node 1; after the sub node 1 is discovered and configured, the main node 102-1 may instruct the sub node 1 to provide power to its downstream link of the bus 106 in order to provide power to the sub node 2 (and so on for additional sub nodes 102-2 coupled to the bus 106). In some aspects, one or more of the sub nodes 102-2 may be locally powered, instead of or in addition to being powered from its upstream bus link. In some such aspects, the local power source for a given sub node 102-2 may be used to provide power to one or more downstream sub nodes.

In some aspects, upstream bus interface circuitry 142 may be disposed between the upstream DS transceiver 122 and the voltage regulator circuitry 130, and downstream bus interface circuitry 141 may be disposed between the downstream DS transceiver 124 and the voltage regulator circuitry 130. Since each link of the bus 106 may carry AC (signal) and DC (power) components, the upstream bus interface circuitry 142 and the downstream bus interface circuitry 141 may separate the AC and DC components, providing the AC components to the upstream DS transceiver 122 and the downstream DS transceiver 124, and providing the DC components to the voltage regulator circuitry 140. AC couplings on the line side of the upstream DS transceiver 122 and downstream DS transceiver 124 substantially isolate the transceivers 122 and 124 from the DC component on the line to allow for high-speed bi-directional communications. As discussed above, the DC component may be tapped for power, and the upstream bus interface circuitry 142 and the downstream bus interface circuitry 141 may include a ferrite, a common mode choke, or an inductor, for example, to reduce the AC component provided to the voltage regulator circuitry 130. In some aspects, the upstream bus interface circuitry 142 may be included in the upstream DS transceiver 122, and/or the downstream bus interface circuitry 141 may be included in the downstream DS transceiver 124; in other aspects, the filtering circuitry may be external to the transceivers 122 and 124.

The node transceiver 120 may include a transceiver 127 for I2S, TDM, and PDM communication between the node transceiver 120 and an external device 155. Although the "external device 155" may be referred to in the singular herein, this is simply for ease of illustration, and multiple external devices may communicate with the node transceiver 120 via the I2S/TDM/PDM transceiver 127. As known in the art, the I2S protocol is for carrying pulse code modulated (PCM) information (e.g., between audio chips on a printed circuit board (PCB)). As used herein, "I2S/TDM" may refer to an extension of the I2S stereo (2-channel) content to multiple channels using TDM. As known in the art, PDM may be used in sigma delta converters, and in particular, PDM format may represent an over-sampled 1-bit sigma delta ADC signal before decimation. PDM format is often used as the output format for digital microphones. The 12S/TDM/PDM transceiver 127 may be in communication with the bus protocol circuitry 126 and pins for communication with the external device 155. Six pins, BCLK, SYNC, DTX[1:0], and DRX[1:0], are illustrated in FIG. 3; the BCLK pin may be used for an I2S bit clock, the SYNC pin may be used for an I2S frame synchronization signal, and the DTX[1:0] and DRX[1:0] pins are used for transmit and receive data channels, respectively. Although two transmit pins (DTX [1:0]) and two receive pins (DRX [1:0]) are illustrated in FIG. 3, any desired number of receive and/or transmit pins may be used.

When the node transceiver 120 is included in the main node 102-1, the external device 155 may include the host 110, and the I2S/TDM/PDM transceiver 127 may provide an I2S slave (regarding BCLK and SYNC) that can receive data from the host 110 and send data to the host 110 synchronously with an I2S interface clock of the host 110. In particular, an I2S frame synchronization signal may be received at the SYNC pin as an input from the host 110, and the PLL 128 may use that signal to generate clocks. When the node transceiver 120 is included in a sub node 102-2, the external device 155 may include one or more peripheral devices 108, and the I2S/TDM/PDM transceiver 127 may provide an I2S clock master (for BCLK and SYNC) that can control I2S communication with the peripheral device 108. In particular, the 12S/TDM/PDM transceiver 127 may provide an I2S frame synchronization signal at the SYNC pin as an output. Registers in the node transceiver 120 may determine which and how many I2S/TDM channels are being transmitted as data slots over the bus 106. A TDM mode (TDMMODE) register in the node transceiver 120 may store a value of how many TDM channels fit between consecutive SYNC pulses on a TDM transmit or receive pin. Together with knowledge of the channel size, the node transceiver 120 may automatically set the BCLK rate to match the number of bits within the sampling time (e.g., 48 kHz).

The node transceiver 120 may include a transceiver 129 for I2C communication between the node transceiver 120 and an external device 157. Although the "external device 157" may be referred to in the singular herein, this is simply for ease of illustration, and multiple external devices may communicate with the node transceiver 120 via the 12C transceiver 129. As known in the art, the I2C protocol uses clock (SCL) and data (SDA) lines to provide data transfer. The I2C transceiver 129 may be in communication with the bus protocol circuitry 126 and pins for communication with the external device 157. Four pins, ADR1, ADR2, SDA, and SCL are illustrated in FIG. 3; ADR1 and ADR2 may be used to modify the I2C addresses used by the node transceiver 120 when the node transceiver 120 acts as an I2C slave (e.g., when it is included in the main node 102-1), and SDA and SCL are used for the I2C serial data and serial clock signals, respectively. When the node transceiver 120 is included in the main node 102-1, the external device 157 may include the host 110, and the I2C transceiver 129 may provide an I2C slave that can receive programming instructions from the host 110. In particular, an I2C serial clock signal may be received at the SCL pin as an input from the host 110 for register accesses. When the node transceiver 120 is included in a sub node 102-2, the external device 157 may include a peripheral device 108 and the I2C transceiver 129 may provide an I2C master to allow the I2C transceiver to program one or more peripheral devices in accordance with instructions provided by the host 110 and transmitted to the node transceiver 120 via the bus 106. In particular, the I2C transceiver 129 may provide the I2C serial clock signal at the SCL pin as an output.

The node transceiver 120 may include a transceiver 146 for SPI communication between the node transceiver 120 and an external device 148. Although the "external device 148" may be referred to in the singular herein, this is simply for ease of illustration, and multiple external devices may communicate with the node transceiver 120 via the SPI transceiver 146. As known in the art, the SPI protocol uses slave select (SS), clock (BCLK), master-out-slave-in (MOSI), and master-in-slave-out (MISO) data lines to provide data transfer, and pins corresponding to these four lines are illustrated in FIG. 3. The SPI transceiver 146 may be in communication with the bus protocol circuitry 126 and pins for communication with the external device 148. When the node transceiver 120 is included in the main node 102-1, the external device 148 may include the host 110 or another external device, and the SPI transceiver 146 may provide an SPI slave that can receive and respond to commands from the host 110 or other external device. When the node transceiver 120 is included in a sub node 102-2, the external device 148 may include a peripheral device 108 and the SPI transceiver 146 may provide an SPI host to allow the SPI transceiver 146 to send commands to one or more peripheral devices 108. The SPI transceiver 146 may include a read data first-in-first-out (FIFO) buffer and a write data FIFO buffer. The read data FIFO buffer may be used to collect data read from other nodes 102 and may be read by an external device 148 when the external device 148 transmits an appropriate read command. The write data FIFO buffer may be used to collect write data from the external device 148 before the write data is transmitted to another device.

The node transceiver 120 may include an interrupt request (IRQ) pin in communication with the bus protocol circuitry 126. When the node transceiver 120 is included in the main node 102-1, the bus protocol circuitry 126 may provide event-driven interrupt requests toward the host 110 via the IRQ pin. When the node transceiver 120 is included in a sub node 102-2 (e.g., when the MSTR pin is low), the IRQ pin may serve as a GPIO pin with interrupt request capability. The node transceiver 120 may include other pins in addition to those shown in FIG. 3 (e.g., as discussed below).

The system 101 may operate in any of a number of different operational modes. The nodes on the bus 106 may each have a register indicating which operational mode is currently enabled. Descriptions follow of examples of various operational modes that may be implemented. In a standby operational mode, bus activity is reduced to enable global power savings; the only traffic required is a minimal downstream preamble to keep the PLLs of each node (e.g., the PLL 128) synchronized. In standby operational mode, reads and writes across the bus 106 are not supported. In a discovery operational mode, the main node 102-1 may send predetermined signals out along the bus 106 and wait for suitable responses to map out the topology of sub nodes 102-2 distributed along the bus 106. In a normal operational mode, full register access may be available to and from the sub nodes 102-2 as well as access to and from peripheral devices 108 over the bus 106. Normal mode may be globally configured by the host 110 with or without synchronous upstream data and with or without synchronous downstream data.

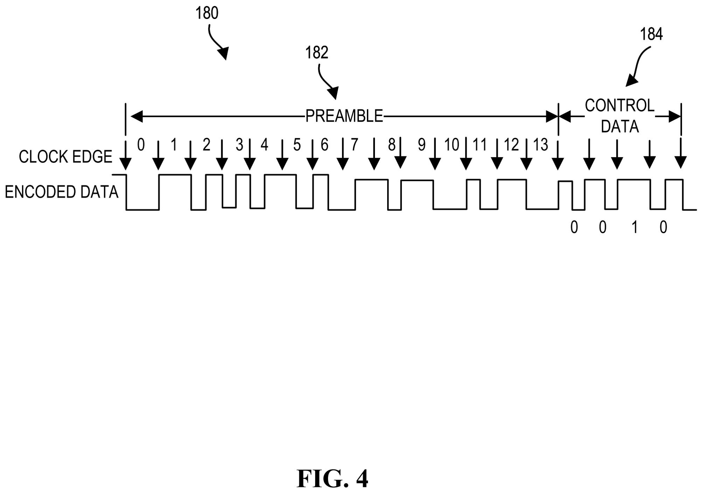

Referring to FIG. 4, an example of a portion of a synchronization control frame 180 may be used for communication in the system 101, in accordance with various aspects. In particular, the synchronization control frame 180 may be used for data clock recovery and PLL synchronization, as discussed below. As noted above, because communications over the bus 106 may occur in both directions, communications may be time-multiplexed into downstream portions and upstream portions. In a downstream portion, a synchronization control frame and downstream data may be transmitted from the main node 102-1, while in an upstream portion, a synchronization response frame, and upstream data may be transmitted to the main node 102-1 from each of the sub nodes 102-2. The synchronization control frame 180 may include a preamble 182 and control data 184. Each sub node 1022 may be configured to use the preamble 182 of the received synchronization control frame 180 as a time base for feeding the PLL 128. To facilitate this, a preamble 182 does not follow the "rules" of valid control data 184 and thus can be readily distinguished from the control data 184.

For example, in some aspects, communication along the bus 106 may be encoded using a clock first, transition on zero differential Manchester coding scheme. According to such an encoding scheme, each bit time begins with a clock transition. If the data value is zero, the encoded signal transitions again in the middle of the bit time. If the data value is one, the encoded signal does not transition again. The preamble 182 illustrated in FIG. 4 may violate the encoding protocol (e.g., by having clock transitions that do not occur at the beginning of bit times 5, 7, and 8), which means that the preamble 182 may not match any legal (e.g., correctly encoded) pattern for the control data 184. In addition, the preamble 182 cannot be reproduced by taking a legal pattern for the control data 184 and forcing the bus 106 high or low for a single bit time or for a multiple bit time period. The preamble 182 illustrated in FIG. 4 is simply illustrative, and the synchronization control frame 180 may include different preambles 182 that may violate the encoding used by the control data 184 in any suitable manner.

The bus protocol circuitry 126 may include differential Manchester decoder circuitry that runs on a clock recovered from the bus 106 and that detects the synchronization control frame 180 to send a frame sync indicator to the PLL 128. In this manner, the synchronization control frame 180 may be detected without using a system clock or a higher-speed oversampling clock. Consequently, the sub nodes 102-2 can receive a PLL synchronization signal from the bus 106 without requiring a crystal clock source at the sub nodes 102-2.

As noted above, communications along the bus 106 may occur in periodic superframes.

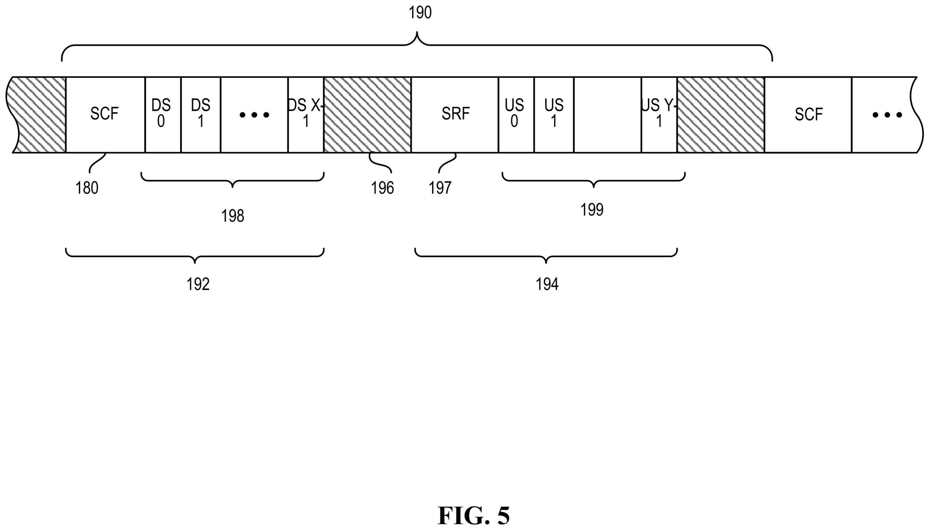

Referring to FIG. 5, an example of a superframe 190 may be used in system 101, in accordance with various aspects. The superframe 190 may begin with a synchronization control frame 180. When the synchronization control frame 180 is used as a timing source for the PLL 128, the frequency at which superframes are communicated ("the superframe frequency") may be the same as the synchronization signal frequency. In some aspects in which audio data is transmitted along the bus 106, the superframe frequency may be the same as the audio sampling frequency used in the system 101 (e.g., either 48 kHz or 44.1 kHz), but any suitable superframe frequency may be used. Each superframe 190 may be divided into periods of downstream transmission 192, periods of upstream transmission 194, and periods of no transmission 196 (e.g., when the bus 106 is not driven).

In FIG. 5, the superframe 190 is shown with an initial period of downstream transmission 192 and a later period of upstream transmission 194. The period of downstream transmission 192 may include a synchronization control frame 180 and X downstream data slots 198, where X can be zero. Substantially all signals on the bus 106 may be line-coded and a synchronization signal forwarded downstream from the main node 102-1 to the last sub node 102-2 (e.g., the sub node 102-2C) in the form of the synchronization preamble 182 in the synchronization control frame 180, as discussed above. Downstream, TDM, synchronous data may be included in the X downstream data slots 198 after the synchronization control frame 180. The downstream data slots 198 may have equal width. As discussed above, the PLL 128 may provide the clock that a node uses to time communications over the bus 106. In some aspects in which the bus 106 is used to transmit audio data, the PLL 128 may operate at a multiple of the audio sampling frequency (e.g., 1024 times the audio sampling frequency, resulting in 1024-bit clocks in each superframe).

The period of upstream transmission 194 may include a synchronization response frame 197 and Y upstream data slots 199, where Y can be zero. In some aspects, each sub node 102-2 may consume a portion of the downstream data slots 198. The last sub node (e.g., sub node 2 in FIG. 2) may respond (after a predetermined response time stored in a register of the last sub node) with a synchronization response frame 197. Upstream, TDM, synchronous data may be added by each sub node 102-2 in the upstream data slots 199 directly after the synchronization response frame 197. The upstream data slots 199 may have equal width. A sub node 102-2 that is not the last sub node (e.g., the sub nodes 0 and 1 in FIG. 2) may replace the received synchronization response frame 197 with its own upstream response if a read of one of its registers was requested in the synchronization control frame 180 of the superframe 190 or if a remote I2C read was requested in the synchronization control frame 180 of the superframe 190.

As discussed above, the synchronization control frame 180 may begin each downstream transmission. In some aspects, the synchronization control frame 180 may be 64 bits in length, but any other suitable length may be used. The synchronization control frame 180 may begin with the preamble 182, as noted above. In some aspects, when the synchronization control frame 180 is retransmitted by a sub node 102-2 to a downstream sub node 102-2, the preamble 182 may be generated by the transmitting sub node 102-2, rather than being retransmitted.

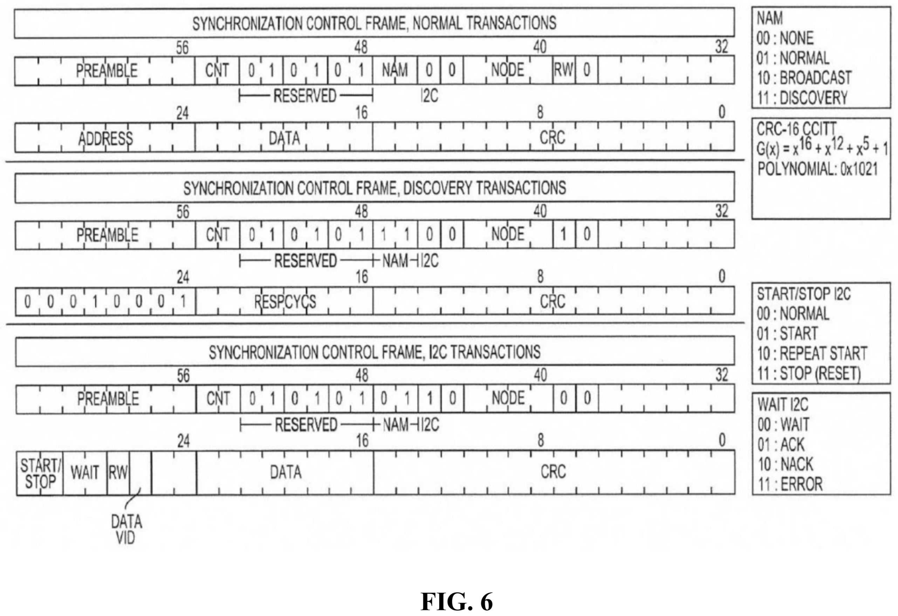

The control data 184 of the synchronization control frame 180 may include fields that contain data used to control transactions over the bus 106. Examples of these fields are discussed below, and some aspects are illustrated in FIG. 6. In particular, FIG. 6 includes example formats for the synchronization control frame 180 in normal mode, I2C mode, and discovery mode, in accordance with various aspects. In some aspects, a different preamble 182 or synchronization control frame 180 entirely may be used in standby mode so that the sub nodes 102-2 do not need to receive all of the synchronization control frame 180 until a transition to normal mode is sent.

In some aspects, the synchronization control frame 180 may include a count (CNT) field. The CNT field may have any suitable length (e.g., 2 bits) and may be incremented (modulo the length of the field) from the value used in the previous superframe. A sub node 102-2 that receives a CNT value that is unexpected may be programmed to return an interrupt.

In some aspects, the synchronization control frame 180 may include a node addressing mode (NAM) field. The NAM field may have any suitable length (e.g., 2 bits) and may be used to control access to registers of a sub node 102-2 over the bus 106. In normal mode, registers of a sub node 102-2 may be read from and/or written to based on the ID of the sub node 102-2 and the address of the register. Broadcast transactions are writes which should be taken by every sub node 102-2. In some aspects, the NAM field may provide for four node addressing modes, including "none" (e.g., data not addressed to any particular sub node 102-2), "normal" (e.g., data unicast to a specific sub node 102-2 specified in the address field discussed below), "broadcast" (e.g., addressed to all sub nodes 102-2), and "discovery."

In some aspects, the synchronization control frame 180 may include an I2C field. The I2C field may have any suitable length (e.g., 1 bit) and may be used to indicate that the period of downstream transmission 192 includes an I2C transaction. The I2C field may indicate that the host 110 has provided instructions to remotely access a peripheral device 108 that acts as an I2C slave with respect to an associated sub node 102-2.

In some aspects, the synchronization control frame 180 may include a node field. The node field may have any suitable length (e.g., 4 bits) and may be used to indicate which sub node is being addressed for normal and I2C accesses. In discovery mode, this field may be used to program an identifier for a newly discovered sub node 102-2 in a node ID register of the sub node 102-2. Each sub node 102-2 in the system 101 may be assigned a unique ID when the sub node 102-2 is discovered by the main node 102-1, as discussed below. In some aspects, the main node 102-1 does not have a node ID, while in other aspects, the main node 102-1 may have a node ID. In some aspects, the sub node 102-2 attached to the main node 102-1 on the bus 106 (e.g., the sub node 0 in FIG. 2) will be sub node 0, and each successive sub node 102-2 will have a number that is 1 higher than the previous sub node. However, this is simply illustrative, and any suitable sub node identification system may be used.

In some aspects, the synchronization control frame 180 may include a read/write (RW) field. The RW field may have any suitable length (e.g., 1 bit) and may be used to control whether normal accesses are reads (e.g., RW==1) or writes (e.g., RW==0).

In some aspects, the synchronization control frame 180 may include an address field. The address field may have any suitable length (e.g., 8 bits) and may be used to address specific registers of a sub node 102-2 through the bus 106. For I2C transactions, the address field may be replaced with I2C control values, such as START/STOP, WAIT, RW, and DATA VLD. For discovery transactions, the address field may have a predetermined value (e.g., as illustrated in FIG. 6).

In some aspects, the synchronization control frame 180 may include a data field. The data field may have any suitable length (e.g., 8 bits) and may be used for normal, I2C, and broadcast writes. The RESPCYCS value, multiplied by 4, may be used to determine how many cycles a newly discovered node should allow to elapse between the start of the synchronization control frame 180 being received and the start of the synchronization response frame 197 being transmitted. When the NAM field indicates discovery mode, the node address and data fields discussed below may be encoded as a RESPCYCS value that, when multiplied by a suitable optional multiplier (e.g., 4), indicates the time, in bits, from the end of the synchronization control frame 180 to the start of the synchronization response frame 197. This allows a newly discovered sub node 102-2 to determine the appropriate time slot for upstream transmission.

In some aspects, the synchronization control frame 180 may include a cyclic redundancy check (CRC) field. The CRC field may have any suitable length (e.g., 16 bits) and may be used to transmit a CRC value for the control data 184 of the synchronization control frame 180 following the preamble 182. In some aspects, the CRC may be calculated in accordance with the CCITT-CRC error detection scheme.

In some aspects, at least a portion of the synchronization control frame 180 between the preamble 182 and the CRC field may be scrambled in order to reduce the likelihood that a sequence of bits in this interval will periodically match the preamble 182 (and thus may be misinterpreted by the sub node 102-2 as the start of a new superframe 190), as well as to reduce electromagnetic emissions as noted above. In some such aspects, the CNT field of the synchronization control frame 180 may be used by scrambling logic to ensure that the scrambled fields are scrambled differently from one superframe to the next. Various aspects of the system 101 described herein may omit scrambling.

Other techniques may be used to ensure that the preamble 182 can be uniquely identified by the sub nodes 102-2 or to reduce the likelihood that the preamble 182 shows up elsewhere in the synchronization control frame 180, in addition to or in lieu of techniques such as scrambling and/or error encoding as discussed above. For example, a longer synchronization sequence may be used to reduce the likelihood that a particular encoding of the remainder of the synchronization control frame 180 will match it. Additionally or alternatively, the remainder of the synchronization control frame may be structured so that the synchronization sequence cannot occur, such as by placing fixed "0" or "1" values at appropriate bits.

The main node 102-1 may send read and write requests to the sub nodes 102-2, including both requests specific to communication on the bus 106 and I2C requests. For example, the main node 102-1 may send read and write requests (indicated using the RW field) to one or more designated sub nodes 1022 (using the NAM and node fields) and can indicate whether the request is a request for the sub node 102-2 specific to the bus 106, an I2C request for the sub node 102-2, or an I2C request to be passed along to an I2C-compatible peripheral device 108 coupled to the sub node 102-2 at one or more I2C ports of the sub node 102-2.

Turning to upstream communication, the synchronization response frame 197 may begin each upstream transmission. In some aspects, the synchronization response frame 197 may be 64 bits in length, but any other suitable length may be used. The synchronization response frame 197 may also include a preamble, as discussed above with reference to the preamble 182 of the synchronization control frame 180, followed by data portion. At the end of a downstream transmission, the last sub node 102-2 on the bus 106 may wait until the RESPCYCS counter has expired and then begin transmitting a synchronization response frame 197 upstream. If an upstream sub node 102-2 has been targeted by a normal read or write transaction, a sub node 102-2 may generate its own synchronization response frame 197 and replace the one received from downstream. If any sub node 102-2 does not see a synchronization response frame 197 from a downstream sub node 102-2 at the expected time, the sub node 102-2 will generate its own synchronization response frame 197 and begin transmitting it upstream.

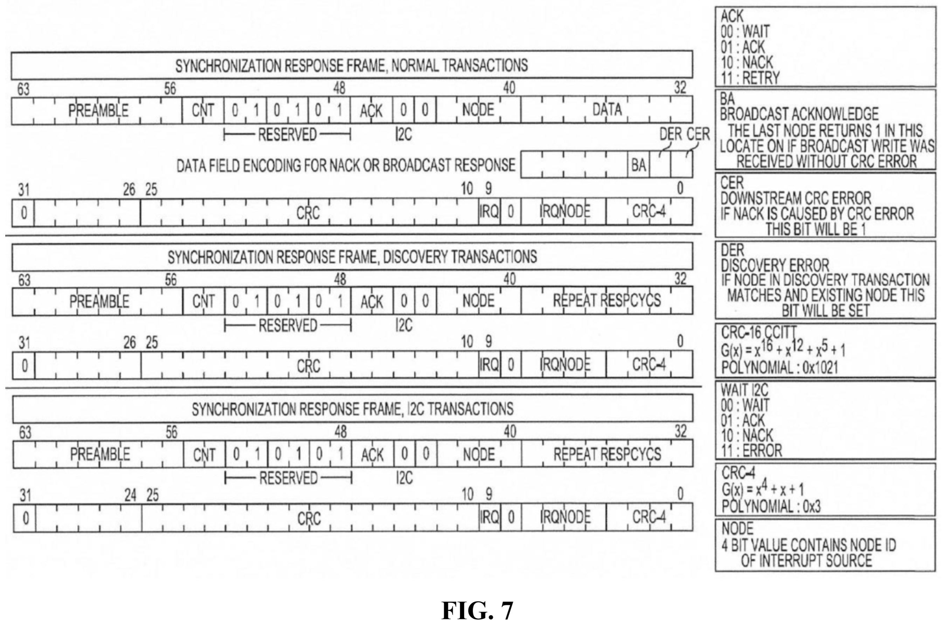

The data portion of the synchronization response frame 197 may include fields that contain data used to communicate response information back to the main node 102-1. Examples of these fields are discussed below, and some aspects are illustrated in FIG. 7. In particular, FIG. 7 includes example formats for the synchronization response frame 197 in normal mode, 12C mode, and discovery mode, in accordance with various aspects.

In some aspects, the synchronization response frame 197 may include a count (CNT) field. The CNT field may have any suitable length (e.g., 2 bits) and may be used to transmit the value of the CNT field in the previously received synchronization control frame 180.

In some aspects, the synchronization response frame 197 may include an acknowledge (ACK) field. The ACK field may have any suitable length (e.g., 2 bits), and may be inserted by a sub node 102-2 to acknowledge a command received in the previous synchronization control frame 180 when that sub node 102-2 generates the synchronization response frame 197. Example indicators that may be communicated in the ACK field include wait, acknowledge, not acknowledge (NACK), and retry. In some aspects, the ACK field may be sized to transmit an acknowledgment by a sub node 102-2 that it has received and processed a broadcast message (e.g., by transmitting a broadcast acknowledgment to the main node 102-1). In some such aspects, a sub node 102-2 also may indicate whether the sub node 102-2 has data to transmit (which could be used, for example, for demand-based upstream transmissions, such as non-TDM inputs from a keypad or touchscreen, or for prioritized upstream transmission, such as when the sub node 102-2 wishes to report an error or emergency condition).

In some aspects, the synchronization response frame 197 may include an I2C field. The I2C field may have any suitable length (e.g., 1 bit) and may be used to transmit the value of the I2C field in the previously received synchronization control frame 180.

In some aspects, the synchronization response frame 197 may include a node field. The node field may have any suitable length (e.g., 4 bits) and may be used to transmit the ID of the sub node 102-2 that generates the synchronization response frame 197.

In some aspects, the synchronization response frame 197 may include a data field. The data field may have any suitable length (e.g., 8 bits), and its value may depend on the type of transaction and the ACK response of the sub node 1022 that generates the synchronization response frame 197. For discovery transactions, the data field may include the value of the RESPCYCS field in the previously received synchronization control frame 180. When the ACK field indicates a NACK, or when the synchronization response frame 197 is responding to a broadcast transaction, the data field may include a broadcast acknowledge (BA) indicator (in which the last sub node 102-2 may indicate if the broadcast write was received without error), a discovery error (DER) indicator (indicating whether a newly discovered sub node 102-2 in a discovery transaction matches an existing sub node 102-2), and a CRC error (CER) indicator (indicating whether a NACK was caused by a CRC error).

In some aspects, the synchronization response frame 197 may include a CRC field. The CRC field may have any suitable length (e.g., 16 bits) and may be used to transmit a CRC value for the portion of the synchronization response frame 197 between the preamble and the CRC field.

In some aspects, the synchronization response frame 197 may include an interrupt request (IRQ) field. The IRQ field may have any suitable length (e.g., 1 bit) and may be used to indicate that an interrupt has been signaled from a sub node 102-2.

In some aspects, the synchronization response frame 197 may include an IRQ node (IRQNODE) field. The IRQNODE field may have any suitable length (e.g., 4 bits) and may be used to transmit the ID of the sub node 102-2 that has signaled the interrupt presented by the IRQ field. In some aspects, the sub node 102-2 for generating the IRQ field will insert its own ID into the IRQNODE field.

In some aspects, the synchronization response frame 197 may include a second CRC (CRC-4) field. The CRC-4 field may have any suitable length (e.g., 4 bits) and may be used to transmit a CRC value for the IRQ and IRQNODE fields.

In some aspects, the synchronization response frame 197 may include an IRQ field, an IRQNODE field, and a CRC-4 field as the last bits of the synchronization response frame 197 (e.g., the last 10 bits). As discussed above, these interrupt-related fields may have their own CRC protection in the form of CRC-4 (and thus not protected by the preceding CRC field). Any sub node 102-2 that needs to signal an interrupt to the main node 102-1 will insert its interrupt information into these fields. In some aspects, a sub node 102-2 with an interrupt pending may have higher priority than any sub node 102-2 further downstream that also has an interrupt pending. The last sub node 102-2 along the bus 106 (e.g., the sub node 2 in FIG. 2) may always populate these interrupt fields. If the last sub node 102-2 has no interrupt pending, the last sub node 102-2 may set the IRQ bit to 0, the IRQNODE field to its node ID, and provide the correct CRC-4 value. For convenience, a synchronization response frame 197 that conveys an interrupt may be referred to herein as an "interrupt frame."

In some aspects, at least a portion of the synchronization response frame 197 between the preamble 182 and the CRC field may be scrambled to reduce emissions. In some such aspects, the CNT field of the synchronization response frame 197 may be used by scrambling logic to ensure that the scrambled fields are scrambled differently from one superframe to the next. Various aspects of the system 101 described herein may omit scrambling.

Other techniques may be used to ensure that the preamble 182 can be uniquely identified by the sub nodes 102-2 or to reduce the likelihood that the preamble 182 shows up elsewhere in the synchronization response frame 197, in addition to or in lieu of techniques such as scrambling and/or error encoding as discussed above. For example, a longer synchronization sequence may be used to reduce the likelihood that a particular encoding of the remainder of the synchronization response frame 197 will match it. Additionally or alternatively, the remainder of the synchronization response frame may be structured so that the synchronization sequence cannot occur, such as by placing fixed "0" or "1" values at appropriate bits.

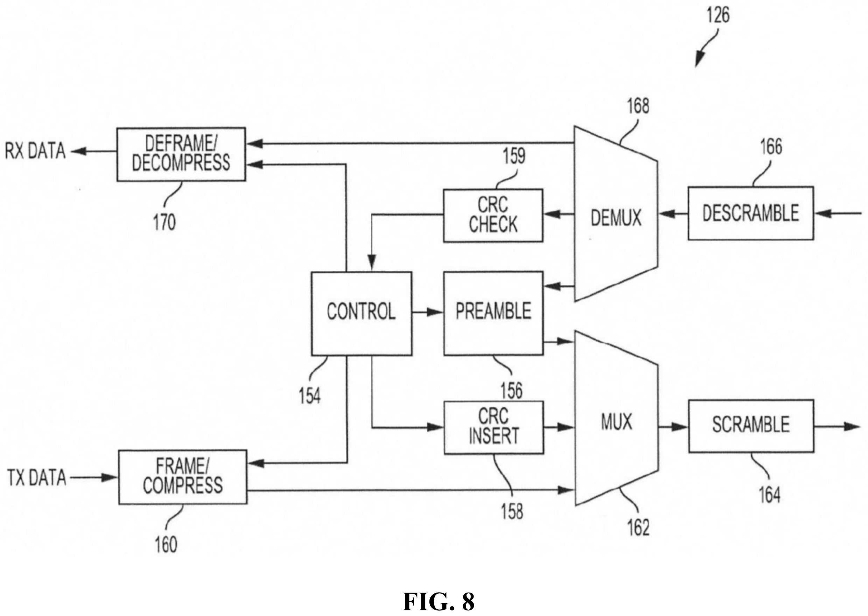

Referring to FIG. 8, an example of the bus protocol circuitry 126 of FIG. 3 includes control circuitry 154 to control the operation of the node transceiver 120 in accordance with the protocol for the bus 106 described herein. In particular, the control circuitry 154 may control the generation of synchronization frames for transmission (e.g., synchronization control frames or synchronization response frames, as discussed above), the processing of received synchronization frames, and the performance of control operations specified in received synchronization control frames. The control circuitry 154 may include programmable registers, as discussed below. The control circuitry 154 may create and receive synchronization control frames, react appropriately to received messages (e.g., associated with a synchronization control frame when the bus protocol circuitry 126 is included in a sub node 102-2 or from an I2C device when the bus protocol circuitry 126 is included in a main node 102-1), and adjust the framing to the different operational modes (e.g., normal, discovery, standby, etc.).

When the node transceiver 120 is preparing data for transmission along the bus 106, preamble circuitry 156 may be configured to generate preambles for synchronization frames for transmission, and to receive preambles from received synchronization frames. In some aspects, a downstream synchronization control frame preamble may be sent by the main node 102-1 every 1024 bits. As discussed above, one or more sub nodes 102-2 may synchronize to the downstream synchronization control frame preamble and generate local, phase-aligned main clocks from the preamble.

CRC insert circuitry 158 may be configured to generate one or more CRCs for synchronization frames for transmission. Frame/compress circuitry 160 may be configured to take incoming data from the I2S/TDM/PDM transceiver 127 (e.g., from a frame buffer associated with the transceiver 127), the I2C transceiver 129, and/or the SPI transceiver 146, optionally compress the data, and optionally generate parity check bits or error correction codes (ECC) for the data. A multiplexer (MUX) 162 may multiplex a preamble from the preamble circuitry 156, synchronization frames, and data into a stream for transmission. In some aspects, the transmit stream may be scrambled by scrambling circuitry 164 before transmission.

For example, in some aspects, the frame/compress circuitry 160 may apply a floating-point compression scheme. In such an aspect, the control circuitry 154 may transmit 3 bits to indicate how many repeated sign bits are in the number, followed by a sign bit and N-4 bits of data, where N is the size of the data to be transmitted over the bus 106. The use of data compression may be configured by the main node 102-1 when desired.

In some aspects, the receive stream entering the node transceiver 120 may be descrambled by the descrambling circuitry 166. A demultiplexer (DEMUX) 168 may demultiplex the preamble, synchronization frames, and data from the receive stream. CRC check circuitry 159 on the receive side may check received synchronization frames for the correct CRC. When the CRC check circuitry 159 identifies a CRC failure in an incoming synchronization control frame 180, the control circuitry 154 may be notified of the failure and will not perform any control commands in the control data 184 of the synchronization control frame 180. When the CRC check circuitry 159 identifies a CRC failure in an incoming synchronization response frame 197, the control circuitry 154 may be notified of the failure and may generate an interrupt for transmission to the host 110 in an interrupt frame. Deframe/decompress circuitry 170 may accept receive data, optionally check its parity, optionally perform error detection and correction (e.g., single error correction - double error detection (SECDED)), optionally decompress the data, and may write the receive data to the 12S/TDM/PDM transceiver 127 (e.g., a frame buffer associated with the transceiver 127), the I2C transceiver 129, and/or the SPI transceiver 146.

As discussed above, upstream, and downstream data may be transmitted along the bus 106 in TDM data slots within a superframe 190. The control circuitry 154 may include registers dedicated to managing these data slots on the bus 106, a number of examples of which are discussed below. When the control circuitry 154 is included in a main node 102-1, the values in these registers may be programmed into the control circuitry 154 by the host 110. When the control circuitry 154 is included in a sub node 102-2, the values in these registers may be programmed into the control circuitry 154 by the main node 102-1.

In some aspects, the control circuitry 154 may include a downstream slots (DNSLOTS) register. When the node transceiver 120 is included in the main node 102-1, this register may hold the value of the total number of downstream data slots. This register may also define the number of data slots that will be used for combined I2S/TDM/PDM receive by the I2S/TDM/PDM transceiver 127 in the main node 102-1. In a sub node 102-2, this register may define the number of data slots that are passed downstream to the next sub node 102-2 before or after the addition of locally generated downstream slots, as discussed in further detail below with reference to LDNSLOTS.

In some aspects, the control circuitry 154 may include a local downstream slots (LDNSLOTS) register. This register may be unused in the main node 102-1. In a sub node 102-2, this register may define the number of data slots that the sub node 102-2 will use and not retransmit. Alternatively, this register may define the number of slots that the sub node 102-2 may contribute to the downstream link of the bus 106.

In some aspects, the control circuitry 154 may include an upstream slots (UPSLOTS) register. In the main node 102-1, this register may hold the value of the total number of upstream data slots. This register may also define the number of slots that will be used for I2S/TDM transmit by the I2S/TDM/PDM transceiver 127 in the main node 102-1. In a sub node 102-2, this register may define the number of data slots that are passed upstream before the sub node 1022 begins to add its own data.

In some aspects, the control circuitry 154 may include a local upstream slots (LUPSLOTS) register. This register may be unused in the main node 102-1. In a sub node 102-2, this register may define the number of data slots that the sub node 102-2 will add to the data received from downstream before it is sent upstream. This register may also define the number of data slots that will be used for combined I2S/TDM/PDM receive by the I2S/TDM/PDM transceiver 127 in the sub node 102-2.

In some aspects, the control circuitry 154 may include a broadcast downstream slots (BCDNSLOTS) register. This register may be unused in the main node 102-1. In a sub node 102-2, this register may define the number of broadcast data slots. In some aspects, broadcast data slots may always come at the beginning of the data field. The data in the broadcast data slots may be used by multiple sub nodes 102-2 and may be passed downstream by all sub nodes 102-2 whether they are used.

In some aspects, the control circuitry 154 may include a slot format (SLOTFMT) register. This register may define the format of data for upstream and downstream transmissions. The data size for the I2S/TDM/PDM transceiver 127 may also be determined by this register. In some aspects, valid data sizes include 8, 12, 16, 20, 24, 28, and 32 bits. This register may also include bits to enable floating point compression for downstream and upstream traffic. When floating point compression is enabled, the I2S/TDM data size may be 4 bits larger than the data size over the bus 106. All nodes in the system 101 may have the same values for SLOTFMT when data slots are enabled, and the nodes may be programmed by a broadcast write so that all nodes will be updated with the same value.

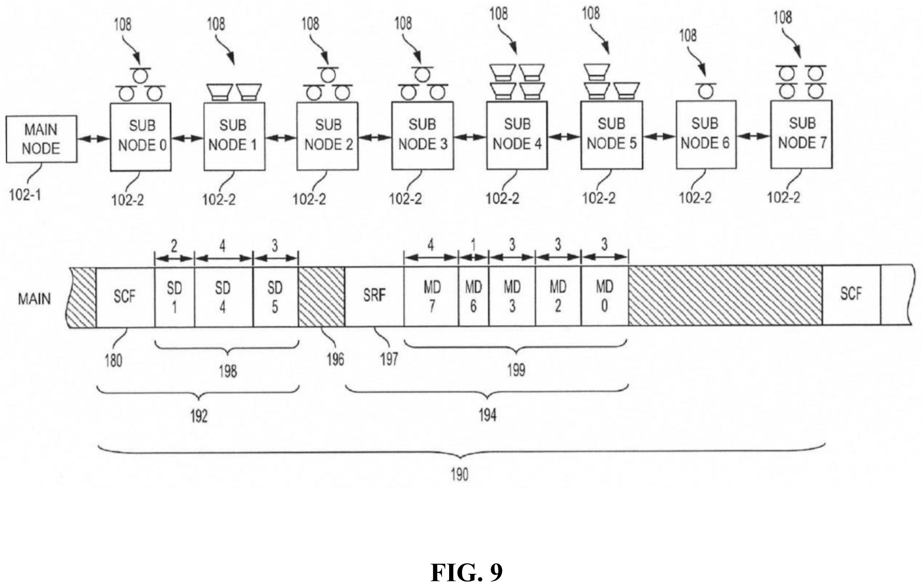

Referring to FIGS. 9-12, the present aspects include examples of information exchange along the bus 106, in accordance with various implementations of the bus protocols described herein. In particular, FIGS. 9-12 include aspects in which each sub node 102-2 is coupled to one or more speakers and/or one or more microphones as the peripheral device 108. This is simply illustrative, as any desired arrangement of peripheral device 108 may be coupled to any particular sub node 102-2 in accordance with the techniques described herein.

To begin, referring to FIG. 9, signaling and timing considerations for bidirectional communication on the bus 106 are provided in accordance with various aspects. The sub nodes 102-2 depicted in FIG. 9 have various numbers of sensor/actuator elements, and so different amounts of data may be sent to, or received from, the various sub nodes 102-2. Specifically, sub node 1 has two elements, sub node 4 has four elements, and sub node 5 has three elements, so the data transmitted by the main node 102-1 includes two time slots for sub node 1, four time slots for sub node 4, and three time slots for sub node 5. Similarly, sub node 0 has three elements, sub node 2 has three elements, sub node 3 has three elements, sub node 6 has one element, and sub node 7 has four elements, so the data transmitted upstream by those sub nodes 102-2 includes the corresponding number of time slots. It should be noted that there need not have to be a one-to-one correlation between elements and time slots. For example, a microphone array, included in the peripheral device 108, having three microphones may include a DSP that combines signals from the three microphones (and possibly also information received from the main node 102-1 or from other sub nodes 1022) to produce a single data sample, which, depending on the type of processing, could correspond to a single time slot or multiple time slots.

In FIG. 9, the main node 102-1 transmits an SCF followed by data for speakers coupled to specific sub nodes 102-2 (SD). Each successive sub node 1022 forwards the SCF and forwards at least any data destined for downstream sub nodes 102-2. A particular sub node 102-2 may forward all data or may remove data destined for that sub node 102-2. When the last sub node 102-2 receives the SCF, that sub node 102-2 transmits the SRF optionally followed by any data that the sub node 102-2 is permitted to transmit. Each successive sub node 102-2 forwards the SRF along with any data from downstream sub nodes 102-2 and optionally inserts data from one or more microphones coupled to the particular sub nodes 102-2 (MD). In the example of FIG. 9, the main node 102-1 sends data to sub nodes 1, 4, and 5 (depicted in FIG. 9 as active speakers) and receives data from sub nodes 7, 6, 3, 2, and 0 (depicted in FIG. 9 as microphone arrays).

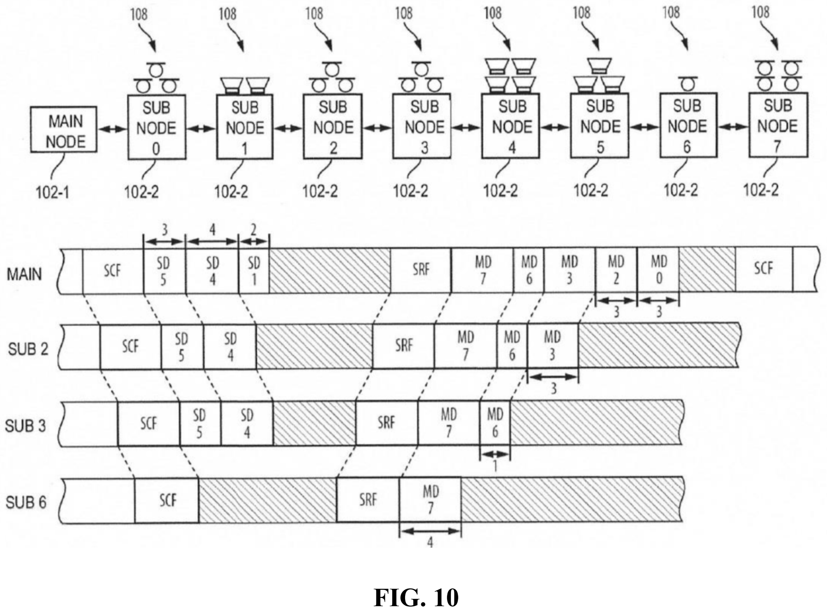

Referring to FIG. 10, the present aspects include the dynamic removal of data from a downstream transmission and insertion of data into an upstream transmission, from the perspective of the downstream DS transceiver 124. In FIG. 10, as in FIG. 9, the main node 102-1 transmits a SCF followed by data for sub nodes 1, 4, and 5 (SD) in reverse order (e.g., data for sub node 5 is followed by data for sub node 4, which is followed by data for sub node 1, etc.) (see the row labeled MAIN). When sub node 1 receives this transmission, sub node 1 removes its own data and forwards to sub node 2 only the SCF followed by the data for sub nodes 5 and 4. Sub nodes 2 and 3 forward the data unchanged (see the row labeled SUB 2), such that the data forwarded by sub node 1 is received by sub node 4 (see the row labeled SUB 3). Sub node 4 removes its own data and forwards to sub node 5 only the SCF followed by the data for sub node 5, and, similarly, sub node 5 removes its own data and forwards to sub node 6 only the SCF. Sub node 6 forwards the SCF to sub node 7 (see the row labeled SUB 6).

At this point, sub node 7 transmits to sub node 6 the SRF followed by its data (see the row labeled SUB 6). Sub node 6 forwards to sub node 5 the SRF along with the data from sub node 7 and its own data, and sub node 5 in turn forwards to sub node 4 the SRF along with the data from sub nodes 7 and 6. Sub node 4 has no data to add, so it simply forwards the data to sub node 3 (see the row labeled SUB 3), which forwards the data along with its own data to sub node 2 (see the row labeled SUB 2), which in turn forwards the data along with its own data to sub node 1. Sub node 1 has no data to add, so it forwards the data to sub node 0, which forwards the data along with its own data. As a result, the main node 102-1 receives the SRF followed by the data from sub nodes 7, 6, 3, 2, and 0 (see the row labeled MAIN).

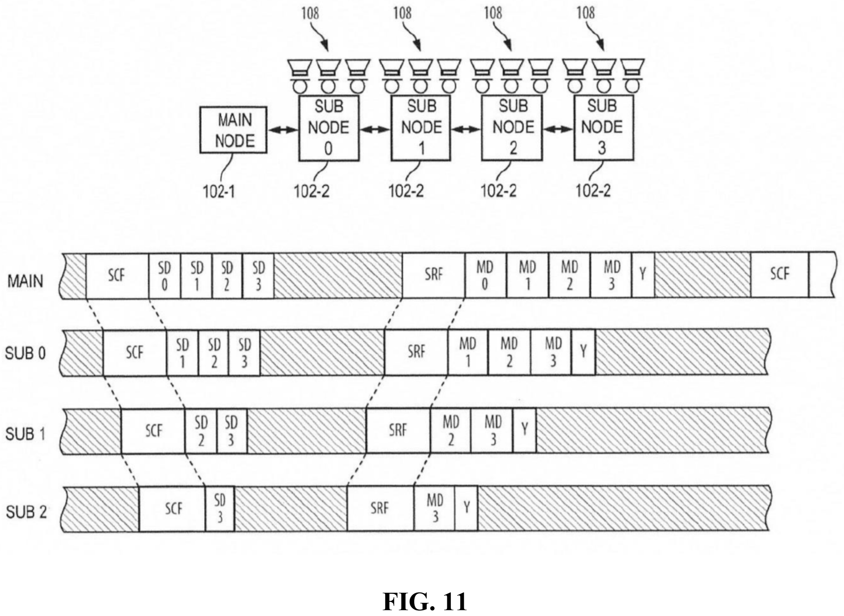

Referring to FIG. 11, the present aspects include another example of the dynamic removal of data from a downstream transmission and insertion of data into an upstream transmission, from the perspective of the downstream DS transceiver 124, as in FIG. 10, although in FIG. 11, the sub nodes 102-2 are coupled with both sensors and actuators as the peripheral device 108 such that the main node 102-1 sends data downstream to all of the sub nodes 102-2 and receives data back from all of the sub nodes 102-2. Also, in FIG. 11, the data is ordered based on the node address to which it is destined or from which it originates. The data slot labelled "Y" may be used for a data integrity check or data correction.

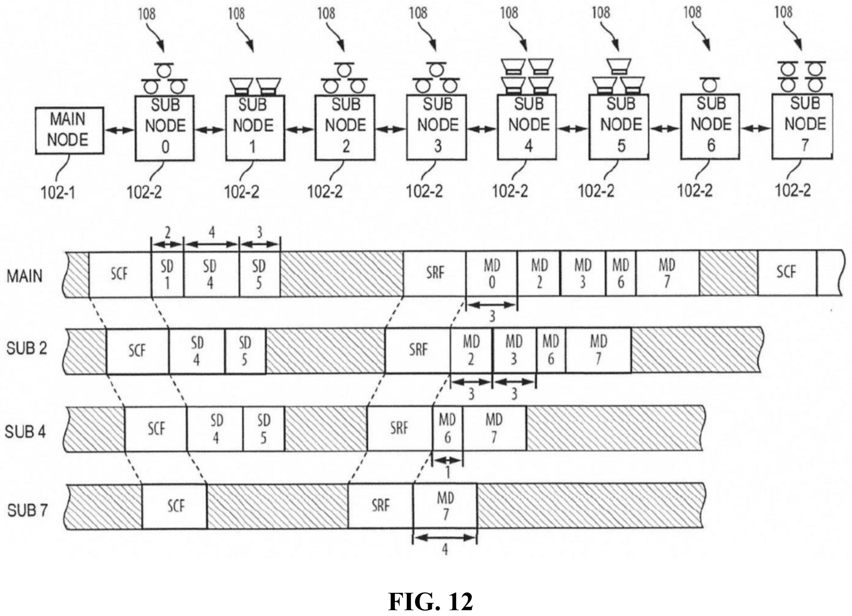

Referring to FIG. 12, the present aspects include another example of the dynamic removal of data from a downstream transmission and insertion of data into an upstream transmission, from the perspective of the downstream DS transceiver 124, as in FIG. 10, although in FIG. 12, the data is conveyed downstream and upstream in sequential order rather than reverse order. Buffering at each sub node 102-2 allows for selectively adding, removing, and/or forwarding data.

As discussed above, each sub node 102-2 may remove data from downstream or upstream transmissions and/or may add data to downstream or upstream transmissions. Thus, for example, the main node 102-1 may transmit a separate sample of data to each of a number of sub nodes 102-2, and each such sub node 102-2 may remove its data sample and forward only data intended for downstream sub nodes 102-2. On the other hand, a sub node 102-2 may receive data from a downstream sub node 102-2 and forward the data along with additional data. One advantage of transmitting as little information as needed is to reduce the amount of power consumed collectively by the system 101.

The system 101 may also support broadcast transmissions (and multicast transmissions) from the main node 102-1 to the sub nodes 102-2, specifically through configuration of the downstream slot usage of the sub nodes 102-2. Each sub node 102-2 may process the broadcast transmission and pass it along to the next sub node 102-2, although a particular sub node 102-2 may "consume" the broadcast message, (i.e., not pass the broadcast transmission along to the next sub node 102-2).

The system 101 may also support upstream transmissions (e.g., from a particular sub node 102-2 to one or more other sub nodes 102-2). Such upstream transmissions can include unicast, multicast, and/or broadcast upstream transmissions. With upstream addressing, as discussed above with reference to downstream transmissions, a sub node 102-2 may determine whether or not to remove data from an upstream transmission and/or whether or not to pass an upstream transmission along to the next upstream sub node 102-2 based on configuration of the upstream slot usage of the sub nodes 102-2. Thus, for example, data may be passed by a particular sub node 102-2 to one or more other sub nodes 102-2 in addition to, or in lieu of, passing the data to the main node 1021. Such sub-sub relationships may be configured, for example, via the main node 102-1.

Thus, in various aspects, the sub nodes 102-2 may operate as active/intelligent repeater nodes, with the ability to selectively forward, drop, and add information. The sub nodes 102-2 may generally perform such functions without necessarily decoding/examining all of the data, since each sub node 102-2 knows the relevant time slot(s) within which it will receive/transmit data and hence can remove data from or add data into a time slot. Notwithstanding that the sub nodes 102-2 may not need to decode/examine all data, the sub nodes 102-2 may typically re-clock the data that it transmits/forwards. This may improve the robustness of the system 101.

In some aspects, the bus 106 may be configured for unidirectional communications in a ring topology.

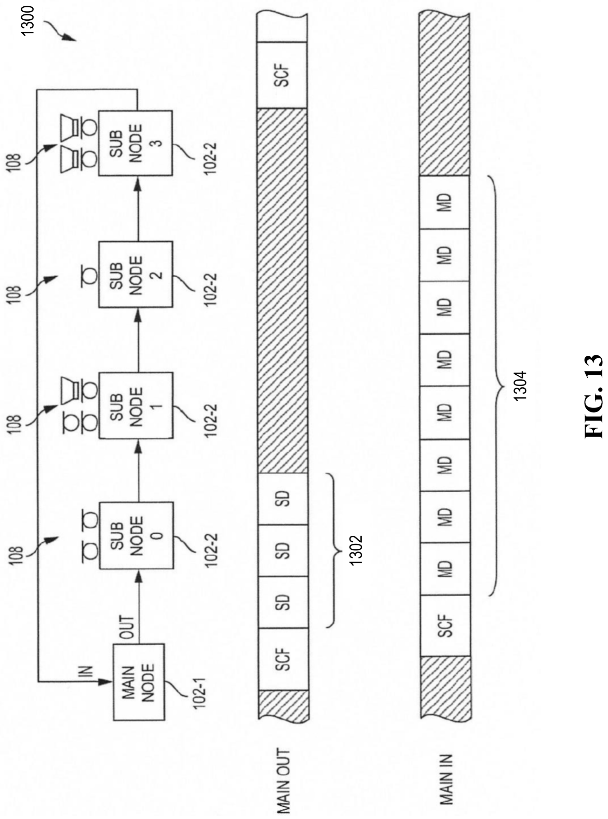

Referring to FIG. 13, for example, the present aspects include an arrangement 1300 of the main node 102-1 and four sub nodes 102-2 in a ring topology, and include signaling and timing considerations for unidirectional communication in the arrangement 1300. In such aspects, the node transceivers 120 in the nodes may include a receive-only transceiver (MAIN IN) and a transmit-only transceiver (MAIN OUT), rather than two bi-directional transceivers for upstream and downstream communication. In the link-layer synchronization scheme illustrated in FIG. 13, the main node 102-1 transmits a SCF 180, optionally followed by "downstream" data 1302 for the three speakers coupled to various sub nodes 102-2 (the data for the different speakers may be arranged in any suitable order, as discussed above with reference to FIGS. 9-12), and each successive sub node 102-2 forwards the synchronization control frame 180 along with any "upstream" data from prior sub nodes 102-2 and "upstream" data of its own to provide "upstream" data 1304 (e.g., the data from the eight different microphones may be arranged in any suitable order, as discussed above with reference to FIGS. 9-12).

As described herein, data may be communicated between elements of the system 101 in any of a number of ways. In some aspects, data may be sent as part of a set of synchronous data slots upstream (e.g., using the data slots 199) by a sub node 102-2 or downstream (e.g., using the data slots 198) by a sub node 102-2 or a main node 102-1. The volume of such data may be adjusted by changing the number of bits in a data slot, or including extra data slots. Data may also be communicated in the system 101 by inclusion in a synchronization control frame 180 or a synchronization response frame 197. Data communicated this way may include I2C control data from the host 110 (with a response from a peripheral device 108 associated with a sub node 102-2); accesses to registers of the sub nodes 102-2 (e.g., for discovery and configuration of slots and interfaces) that may include write access from the host 110/main node 102-1 to a sub node 102-2 and read access from a sub node 102-2 to the host 110/main node 102-1; and event signaling via interrupts from a peripheral device 108 to the host 110. In some aspects, GPIO pins may be used to convey information from a sub node 1022 to the main node 102-1 (e.g., by having the main node 102-1 poll the GPIO pins over I2C, or by having a node transceiver 120 of a sub node 102-2 generate an interrupt at an interrupt request pin). For example, in some such aspects, a host 110 may send information to the main node 102-1 via I2C, and then the main node 102-1 may send that information to the sub node 102-2 via the GPIO pins. Any of the types of data discussed herein as transmitted over the bus 106 may be transmitted using any one or more of these communication pathways. Other types of data and data communication techniques within the system 100 may be disclosed herein.

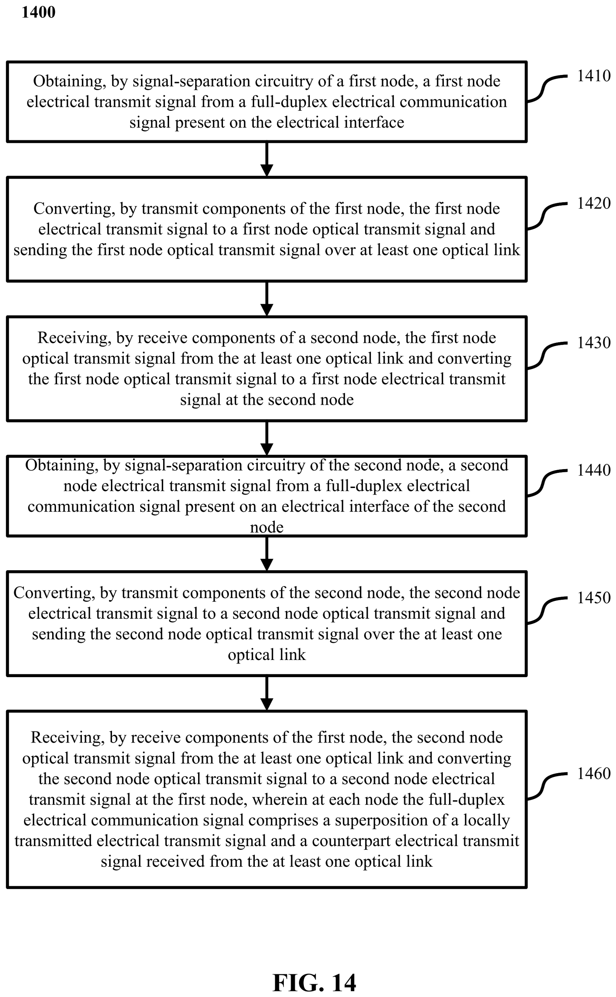

FIG. 14 is a block diagram of methods 1400 for full-duplex communication between nodes over an electrical interface and an optical link. In such methods 1400, a signal-separation circuitry of a first node obtains a first node electrical transmit signal from a full-duplex electrical communication signal present on the electrical interface - **Block 1410.** The full-duplex electrical communication signal on interface IF1 (the first node's local electrical interface to the bus, implemented as a single-ended conductor or a differential pair) is the superposition of the first node's locally transmitted waveform and a counterpart waveform received from a peer node over an optical link and reconverted at the first node. The electrical interface can be implemented as a single-ended conductor with a return or, alternatively, as a differential pair. In some examples, a twisted pair provides controlled impedance and common-mode rejection for improved electromagnetic compatibility. The signal-separation circuitry may comprise one or more directional couplers configured to couple the local electrical transmit signal TX1 into the line while sampling the line voltage and/or current to recover the peer contribution, although other coupling networks or hybrids can be used.

In an example continuing from FIG. 1, a main node 102-1 employs directional couplers 102-12, 102-14 to obtain the first node electrical transmit signal TX1 from the full-duplex signal FD1 (the full-duplex electrical communication signal on interface IF1) on the A2B-style two-wire bus 102-11, which may carry line-coded baseband signalling (e.g., Manchester, biphase-mark, or NRZI with run-length limiting) or, in other examples, a carrier-based or modulated waveform (e.g., an A2B 2.0 physical layer).

In such methods 1400, transmit components of the first node convert the first node electrical transmit signal to a first node optical transmit signal and send the first node optical transmit signal over at least one optical link - **Block 1420.** The transmit components may include a differential amplifier stage that conditions TX1 to drive an analog optical transmitter, and in certain examples the conversion between electrical and optical domains is performed without transitioning to a digital domain so as to preserve protocol timing and modulation characteristics with minimal latency. The at least one optical link may comprise an optical fiber; in some examples, bidirectional optical components are employed to communicate over a single fiber via wavelength-division multiplexing, whereas other examples utilize two fibers for simplex paths.

Continuing the example, the main node 102-1 employs a line driver to feed an HFBR1402Z analog optical transmitter (part of 102-16), which launches the first node optical transmit signal OTX1 into fiber 140 toward a sub node 102-2. In test environments such as an electromagnetic-compatibility chamber, the fiber may traverse the chamber boundary, thereby avoiding conductive feedthroughs while maintaining full-duplex operation across the boundary.

In such methods 1400, receive components of a second node receive the first node optical transmit signal from the at least one optical link and convert the first node optical transmit signal to a first node electrical transmit signal at the second node- **Block 1430.** The receive components can include an analog optical receiver coupled to a transimpedance amplifier to recover the electrical waveform corresponding to OTX1 with low group delay and sufficient bandwidth to pass the baseband line code or the modulated carrier.

In some examples, the analog optical receiver comprises an HFBR2406Z device and the transimpedance amplifier comprises an AD8015 or an equivalent component selected for low noise and wideband response. In the continuing example, the sub node 102-2 includes optical receiver 102-28 and a TIA/limiting amplifier chain 102-29 that produces an electrical representation RX1' of the first node's transmit signal; RX1' is then provided to recombination circuitry at the sub node 102-2, as described below.

In such methods 1400, signal-separation circuitry of the second node obtains a second node electrical transmit signal from a full-duplex electrical communication signal present on an electrical interface of the second node - **Block 1440.** As at the first node, the second node's electrical interface may be single-ended or differential, and the full-duplex signal at that interface comprises the superposition of the second node's locally transmitted signal TX2 and the counterpart electrical transmit signal recovered from the optical link. The signal-separation circuitry at the second node can likewise comprise one or more directional couplers or an equivalent coupling network.

Continuing the example, the sub node 102-2 uses directional couplers 102-22/102-24 to extract TX2 from the full-duplex signal FD2 on its local bus segment 125, which uses the same line-coded or carrier-based signalling format as the segment at the main node 102-1 so that the two segments behave as a single continuous electrical link from the perspective of higher protocol layers.

In such methods 1400, transmit components of the second node convert the second node electrical transmit signal to a second node optical transmit signal and send the second node optical transmit signal over the at least one optical link - Block **1450.** As with the first node, the conversion can be performed entirely in the analog domain and with low latency to maintain timing margins associated with the maximum supported electrical link distance. In some examples, the transmit components include a differential amplifier configured to drive an analog optical transmitter matched to the receiver bandwidth at the other node; the optical link can be the same fiber using a different wavelength, a second fiber, or another optical medium compatible with the receiver front end.

Continuing the example, the sub node 102-2 employs differential amplifier to drive an HFBR1402Z transmitter (combined as 102-26) that launches OTX2 toward the main node 102-1 over fiber 140 or a complementary fiber in a two-fiber arrangement. The system-level latency introduced by these optical conversions and transport is selected to be less than or equal to the maximum latency tolerated by the underlying bus's electrical-layer timing so that discovery, framing, or slotting operations remain unaffected.

In such methods 1400, receive components of the first node receive the second node optical transmit signal from the at least one optical link and converting the second node optical transmit signal to a second node electrical transmit signal at the first node is performed - **Block 1460.** The receive components at the first node may mirror those at the second node, including an analog optical receiver and a transimpedance amplifier selected for bandwidth, linearity, and low group delay; in certain examples, the receive components include HFBR2406Z and AD8015 devices, although equivalents can be used.

In the continuing example, the main node 102-1 includes optical receiver 102-19 and TIA chain 102-19 that produce RX2' corresponding to the sub node's transmit signal. At each node, recombination circuitry couples the locally generated transmit signal and the counterpart electrical transmit signal onto the electrical interface such that the full-duplex signal on that interface comprises the superposition of both signals. Consequently, higher-layer protocol elements such as superframe timing, slot assignment, and PLL synchronization operate as though the electrical bus were continuous, even though an optical segment bridges between nodes.

In such methods 1400, at each node the full-duplex electrical communication signal comprises a superposition of a locally transmitted electrical transmit signal and a counterpart electrical transmit signal received from the at least one optical link.

In some examples, the full-duplex signal is line-coded baseband with embedded clocking; in other examples, it is a carrier-based or modulated signal. In either case, the analog-domain conversions preserve the waveform without digitization, thereby maintaining eye openings, modulation fidelity, and symbol timing across the optical span. Where the optical components are bidirectional over a single fiber, wavelength-selective devices perform optical-domain separation while the electrical domain at each node remains full-duplex on a single conductor or a differential pair.

In EMC-chamber applications, one node resides inside the chamber and the other outside, with the optical link traversing the chamber boundary to prevent undesired conducted emissions while enabling transparent full-duplex operation across the boundary. The foregoing operations can be performed concurrently in both directions and continuously during steady-state communication.

In some examples, a node in a full duplex electrical communication system, comprises one or more directional couplers configured to obtain a first node electrical transmit signal from a full-duplex electrical communication signal; one or more transmit components configured to convert the first node electrical transmit signal to a first node optical transmit signal, and to send the first node optical transmit signal over at least one optical link; and one or more receive components configured to receive a second node optical transmit signal from the at least one optical link, and to convert the second node optical transmit signal to a second node electrical transmit signal, wherein the first node electrical transmit signal and the second node electrical transmit signal form the full-duplex electrical communication signal.

In some examples, a method of full duplex communications includes: obtaining a first node electrical transmit signal from a full-duplex electrical communication signal; converting the first node electrical transmit signal to a first node optical transmit signal, and to send the first node optical transmit signal over at least one optical link; and receiving a second node optical transmit signal from the at least one optical link, and to convert the second node optical transmit signal to a second node electrical transmit signal, wherein the first node electrical transmit signal and the second node electrical transmit signal form the full-duplex electrical communication signal.

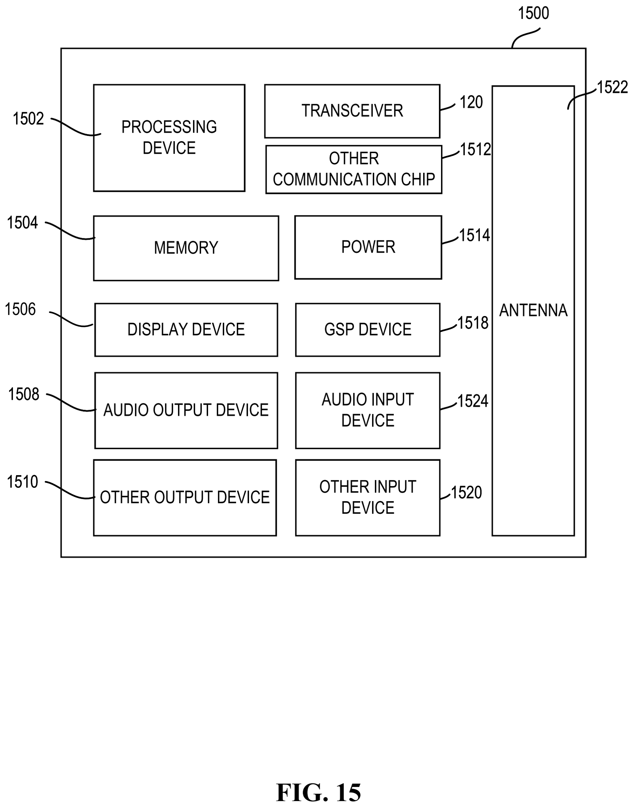

Referring to FIG. 15, for example, the present aspects include a device 1500 that may serve as a host or a node (e.g., a host 110, a main node 102-1, or a sub node 102-2) in the system 101 or the system 100. A number of components are illustrated in FIG. 15 as included in the device 1500, but any one or more of these components may be omitted or duplicated, as suitable for the application.

Additionally, in various aspects, the device 1500 may not include one or more of the components illustrated in FIG. 15, but the device 1500 may include interface circuitry for coupling to the one or more components. For example, the device 1500 may not include a display device 1506, but may include display device interface circuitry (e.g., a connector and driver circuitry) to which a display device 1506 may be coupled. In another set of examples, the device 1500 may not include an audio input device 1524 or an audio output device 1508, but may include audio input or output device interface circuitry (e.g., connectors and supporting circuitry) to which an audio input device 1524 or audio output device 1508 may be coupled.

The device 1500 may include the node transceiver 120, in accordance with any of the aspects disclosed herein, for managing communication along the bus 106 when the device 1500 is coupled to the bus 106. The device 1500 may include a processing device 1502 (e.g., one or more processing devices), which may be included in the node transceiver 120 or separate from the node transceiver 120. As used herein, the term "processing device" may refer to any device or portion of a device that processes electronic data from registers and/or memory to transform that electronic data into other electronic data that may be stored in registers and/or memory. The processing device 1502 may include one or more DSPs, ASICs, central processing units (CPUs), graphics processing units (GPUs), cryptoprocessors, or any other suitable processing devices. The device 1500 may include a memory 1504, which may itself include one or more memory devices such as volatile memory (e.g., dynamic random-access memory (DRAM)), non-volatile memory (e.g., read-only memory (ROM)), flash memory, solid state memory, and/or a hard drive.

In some aspects, the memory 1504 may be employed to store a working copy and a permanent copy of programming instructions to cause the device 1500 to perform any suitable ones of the techniques disclosed herein. In some aspects, machine-accessible media (including non-transitory computer-readable storage media), methods, systems, and devices for performing the above-described techniques are illustrative examples of aspects disclosed herein for communication over a two-wire bus. For example, a computer-readable media (e.g., the memory 1504) may have stored thereon instructions that, when executed by one or more of the processing devices included in the processing device 1502, cause the device 1500 to perform any of the techniques disclosed herein.

In some aspects, the device 1500 may include another communication chip 1512 (e.g., one or more other communication chips). For example, the communication chip 1512 may be configured for managing wireless communications for the transfer of data to and from the device 1500. The term "wireless" and its derivatives may be used to describe circuits, devices, systems, methods, techniques, communications channels, etc., that may communicate data using modulated electromagnetic radiation through a non-solid medium. The term does not imply that the associated devices do not contain any wires, although in some aspects they might not.

The communication chip 1512 may implement any of a number of wireless standards or protocols, including but not limited to Institute for Electrical and Electronic Engineers (IEEE) standards including Wi-Fi (IEEE 802.11 family), IEEE 802.16 standards (e.g., IEEE 802.16-2005 Amendment), Long-Term Evolution (LTE) project along with any amendments, updates, and/or revisions (e.g., advanced LTE project, ultra mobile broadband (UMB) project (also referred to as "3GPP2"), etc.). IEEE 802.16 compatible Broadband Wireless Access (BWA) networks are generally referred to as WiMAX networks, an acronym that stands for Worldwide Interoperability for Microwave Access, which is a certification mark for products that pass conformity and interoperability tests for the IEEE 802.16 standards. The one or more communication chips 1512 may operate in accordance with a Global System for Mobile Communication (GSM), General Packet Radio Service (GPRS), Universal Mobile Telecommunications System (UMTS), High Speed Packet Access (HSPA), Evolved HSPA (E-HSPA), or LTE network. The one or more communication chips 1512 may operate in accordance with Enhanced Data for GSM Evolution (EDGE), GSM EDGE Radio Access Network (GERAN), Universal Terrestrial Radio Access Network (UTRAN), or Evolved UTRAN (E-UTRAN). The one or more communication chips 1512 may operate in accordance with Code Division Multiple Access (CDMA), Time Division Multiple Access (TDMA), Digital Enhanced Cordless Telecommunications (DECT), Evolution-Data Optimized (EV-DO), and derivatives thereof, as well as any other wireless protocols that are designated as 3G, 4G, 5G, and beyond. The communication chip 1512 may operate in accordance with other wireless protocols in other aspects. The device 1500 may include an antenna 1522 to facilitate wireless communications and/or to receive other wireless communications (such as AM or FM radio transmissions).

In some aspects, the communication chip 1512 may manage wired communications using a protocol other than the protocol for the bus 106 described herein. Wired communications may include electrical, optical, or any other suitable communication protocols. Examples of wired communication protocols that may be enabled by the communication chip 1512 include Ethernet, controller area network (CAN), I2C, media-oriented systems transport (MOST), or any other suitable wired communication protocol.

As noted above, the communication chip 1512 may include multiple communication chips. For instance, a first communication chip 1512 may be dedicated to shorter-range wireless communications such as Wi-Fi or Bluetooth, and a second communication chip 1512 may be dedicated to longer-range wireless communications such as global positioning system (GPS), EDGE, GPRS, CDMA, WiMAX, LTE, EV-DO, or others. In some aspects, a first communication chip 1512 may be dedicated to wireless communications, and a second communication chip 1512 may be dedicated to wired communications.

The device 1500 may include battery/power circuitry 1514. The battery/power circuitry 1514 may include one or more energy storage devices (e.g., batteries or capacitors) and/or circuitry for coupling components of the device 1500 to an energy source separate from the device 1500 (e.g., AC line power, voltage provided by a car battery, etc.). For example, the battery/power circuitry 1514 may include the upstream bus interface circuitry 152 and the downstream bus interface circuitry 141 discussed above with reference to FIG. 3 and could be charged by the bias on the bus 106.

The device 1500 may include a display device 1506 (or corresponding interface circuitry, as discussed above). The display device 1506 may include any visual indicators, such as a heads-up display, a computer monitor, a projector, a touchscreen display, a liquid crystal display (LCD), a light-emitting diode display, or a flat panel display, for example.

The device 1500 may include an audio output device 1508 (or corresponding interface circuitry, as discussed above). The audio output device 1508 may include any device that generates an audible indicator, such as speakers, headsets, or earbuds, for example.

The device 1500 may include an audio input device 1524 (or corresponding interface circuitry, as discussed above). The audio input device 1524 may include any device that generates a signal representative of a sound, such as microphones, microphone arrays, or digital instruments (e.g., instruments having a musical instrument digital interface (MIDI) output).

The device 1500 may include a GPS device 1518 (or corresponding interface circuitry, as discussed above). The GPS device 1518 may be in communication with a satellite-based system and may receive a location of the device 1500, as known in the art.

The device 1500 may include another output device 1510 (or corresponding interface circuitry, as discussed above). Examples of the other output device 1510 may include an audio codec, a video codec, a printer, a wired or wireless transmitter for providing information to other devices, or an additional storage device. Additionally, any suitable ones of the peripheral devices 108 discussed herein may be included in the other output device 1510.

The device 1500 may include one or more other input devices 1520 (or corresponding interface circuitry, as discussed above). Examples of the other input device 1520 may include an accelerometer, a gyroscope, an image capture device, a keyboard, a cursor control device such as a mouse, a stylus, a touchpad, a bar code reader, a Quick Response (QR) code reader, or a radio frequency identification (RFID) reader. Additionally, any suitable ones of the sensors or peripheral devices 108 discussed herein may be included in the other input device 1520.

Any suitable ones of the display, input, output, communication, or memory devices described above with reference to the device 1500 may serve as the peripheral device 108 in the system 101. Alternatively or additionally, suitable ones of the display, input, output, communication, or memory devices described above with reference to the device 1500 may be included in a host (e.g., the host 110) or a node (e.g., a main node 102-1 or a sub node 102-2).

The elements of a system 101 may be chosen and configured to provide audio and/or light control over the bus 106. In some aspects, the system 101 may be configured to serve as a light control system in a vehicle or other environment, with lighting devices (e.g., strip-line light-emitting diodes (LEDs) or other LED arrangements) serving as peripheral devices 108 in communication with nodes 102 along the bus 106; data may be communicated over the bus 106 to control the color, intensity, duty cycle, and/or or other parameters of the lighting devices. In some aspects, the system 101 may be configured to serve as an audio control system in a vehicle or other environment, with a microphone or other device including an accelerometer that may serve as a peripheral device 108 in communication with a node 102 along the bus 106; data from the accelerometer may be communicated over the bus 106 to control other peripheral devices 108 along the bus 106. For example, large spikes in the acceleration data or other predetermined acceleration data patterns may be used to trigger the generation of a sound effect, such as a cowbell or drum hit, by a processing device coupled to a node 102; that sound effect may be output by a speaker coupled to the processing device and/or by a speaker coupled to another node 102 along the bus 106. Some aspects of the system 101 may combine any of the lighting control and/or audio control techniques disclosed herein.

Although various ones of the aspects discussed above describe the system 101 in a vehicle setting, this is simply illustrative, and the system 101 may be implemented in any desired setting. For example, in some aspects, a "suitcase" implementation of the system 101 may include a portable housing that includes the desired components of the system 101; such an implementation may be particularly suitable for portable applications, such as portable karaoke or entertainment systems.

## Claims

1. A method for full-duplex communication between nodes over an electrical interface and an optical link, the method comprising:
obtaining, by signal-separation circuitry of a first node, a first node electrical transmit signal from a full-duplex electrical communication signal present on the electrical interface;
converting, by transmit components of the first node, the first node electrical transmit signal to a first node optical transmit signal and sending the first node optical transmit signal over at least one optical link;
receiving, by receive components of a second node, the first node optical transmit signal from the at least one optical link and converting the first node optical transmit signal to a first node electrical transmit signal at the second node;
obtaining, by signal-separation circuitry of the second node, a second node electrical transmit signal from a full-duplex electrical communication signal present on an electrical interface of the second node;
converting, by transmit components of the second node, the second node electrical transmit signal to a second node optical transmit signal and sending the second node optical transmit signal over the at least one optical link; and
receiving, by receive components of the first node, the second node optical transmit signal from the at least one optical link and converting the second node optical transmit signal to a second node electrical transmit signal at the first node,
wherein at each node the full-duplex electrical communication signal comprises a superposition of a locally transmitted electrical transmit signal and a counterpart electrical transmit signal received from the at least one optical link.

2. The method of claim 1, wherein obtaining the electrical transmit signal comprises using one or more directional couplers.

3. The method of claim 1 or 2, wherein the electrical interface is one of single-ended and differential.

4. The method of any of claims 1 to 3, wherein converting between electrical and optical domains is performed without transitioning to a digital domain.

5. The method of any of claims 1 to 4, wherein the at least one optical link comprises an optical fiber.

6. The method of any of claims 1 to 5, wherein the full-duplex electrical communication signal comprises one of (i) a line-coded baseband signal and (ii) a carrier-based or modulated signal.

7. The method of any of claims 1 to 6, wherein an end-to-end latency introduced by converting and transporting over the at least one optical link is less than a maximum latency corresponding to a maximum supported electrical link distance for the full-duplex electrical communication signal.

8. The method of any of claims 1 to 7, further comprising deploying at least one node to couple an electrical interface inside an electromagnetic-compatibility chamber to an electrical interface outside the electromagnetic-compatibility chamber.

9. A node configured for full-duplex communication over an electrical interface and an optical link, the node comprising:
signal-separation circuitry configured to obtain a first node electrical transmit signal from a full-duplex electrical communication signal present on the electrical interface;
transmit components configured to convert the first node electrical transmit signal to a first node optical transmit signal and to send the first node optical transmit signal over at least one optical link; and
receive components configured to receive a peer optical transmit signal from the at least one optical link and to convert the peer optical transmit signal to a peer electrical transmit signal,
wherein the full-duplex electrical communication signal comprises a superposition of the first node electrical transmit signal and the peer electrical transmit signal.

10. A communication system comprising:
a first node and a second node interconnected by at least one optical link, each of the first node and the second node comprising:
signal-separation circuitry configured to:
obtain a local electrical transmit signal from a full-duplex electrical communication signal present on an electrical interface;
transmit components configured to convert the local electrical transmit signal to an optical transmit signal and to send the optical transmit signal over the at least one optical link; and
receive components configured to receive a counterpart optical transmit signal from the at least one optical link and to convert the counterpart optical transmit signal to a counterpart electrical transmit signal,
wherein, at each node, the full-duplex electrical communication signal comprises a superposition of the local electrical transmit signal and the counterpart electrical transmit signal.

11. The node of claim 9 or the communication system of claim 10, wherein obtaining the electrical transmit signal comprises using one or more directional couplers.

12. The node of claim 9 or 11, or the communication system of claims 10 or 11, wherein the electrical interface is one of single-ended and differential.

13. The node of any of claims 9 or 11 to 12, or the communication system of any of claims 10 to 12, wherein converting between electrical and optical domains is performed without transitioning to a digital domain.

14. The node of any of claims 9 or 11 to 13, or the communication system of any of claims 10 to 13, wherein the at least one optical link comprises an optical fiber.

15. The node of any of claims 9 or 11 to 14, or the communication system of any of claims 10 to 14, wherein the full-duplex electrical communication signal comprises one of (i) a line-coded baseband signal and (ii) a carrier-based or modulated signal.
